# EUROPÄISCHE PATENTSCHRIFT

(11) **EP 2 749 003 B1**
(45) Veröffentlichungstag und Bekanntmachung des Hinweises auf die Patenterteilung: **27.06.2018**
(21) Anmeldenummer: 12756139.7
(22) Anmeldetag: 22.08.2012
(51) Int. Cl.: H04L 29/06, H04W 12/06, H04W 12/04, H04W 12/12, H04L 9/14, H04L 9/32

(54) **VERFAHREN ZUR AUTHENTISIERUNG EINES TELEKOMMUNIKATIONSENDGERÄTS UMFASSEND EIN IDENTITÄTSMODUL AN EINER SERVEREINRICHTUNG EINES TELEKOMMUNIKATIONSNETZES, VERWENDUNG EINES IDENTITÄTSMODULS, IDENTITÄTSMODUL UND COMPUTERPROGRAMM**
METHOD FOR AUTHENTICATING A TELECOMMUNICATION TERMINAL COMPRISING AN IDENTITY MODULE ON A SERVER DEVICE IN A TELECOMMUNICATION NETWORK, USE OF AN IDENTITY MODULE, IDENTITY MODULE AND COMPUTER PROGRAM
PROCÉDÉ POUR AUTHENTIFIER UN TERMINAL DE COMMUNICATION COMPRENANT UN MODULE D'IDENTITÉ AU NIVEAU D'UN DISPOSITIF SERVEUR D'UN RÉSEAU DE TÉLÉCOMMUNICATION, UTILISATION D'UN MODULE D'IDENTITÉ,MODULE D'IDENTITÉ ET PROGRAMME INFORMATIQUE

(30) Priorität: 24.08.2011 DE 102011110958; 14.11.2011 DE 102011118367
(43) Veröffentlichungstag der Anmeldung: 02.07.2014
(73) Patentinhaber: Deutsche Telekom AG, 53113 Bonn (DE)
(72) Erfinder: FROELS, Martin, 8102 Semriach (AT); TEßMER, Martin, 53225 Bonn (DE)
(74) Vertreter: Schwöbel, Thilo K.
(86) Internationale Anmeldenummer: PCT/EP2012/066337
(87) Internationale Veröffentlichungsnummer: WO 2013/026875

(56) Entgegenhaltungen:
- EP-A1- 1 365 537
- EP-A1- 1 873 668
- WO-A1-2005/041608
- WO-A1-2007/006535
- WO-A2-2007/087432

## Beschreibung

### Stand der Technik

Die Erfindung betrifft ein Verfahren zur Authentisierung eines Telekommunikationsendgeräts umfassend ein Identitätsmodul an einer Servereinrichtung eines Telekommunikationsnetzes, wobei eine dem Identitätsmodul eindeutig zugeordnete Identitätsinformation zur Authentisierung unter Nutzung der Eigenschaften eines asymmetrischen kryptographischen Verfahrens herangezogen wird.

Weiterhin bezieht sich die Erfindung auch auf die Verwendung eines Identitätsmoduls, auf ein Identitätsmodul sowie auf ein Computerprogramm und ein Computerprogrammprodukt.

Bei der Benutzung von Internetdienstleistungen tritt häufig das Problem der Benutzerauthentisierung bzw. der Authentifizierung von Benutzern auf. Gegenwärtig ist es nicht möglich, Benutzer eines Dienstes im Internet in sicherer Weise zu identifizieren. Der kürzlich eingeführte elektronische Personalausweis ist ein erster Schritt in diese Richtung, allerdings verlangt er die Anschaffung eines Lesegerätes für die verwendete NFC basierte Datenübertragung. Diese Anschaffung lohnt sich nicht, wenn der Kunde sporadisch einen Dienst verwenden möchte. Weiterhin ist der elektronische Personalausweise noch für längere Zeit nicht flächendeckend verfügbar.

Darüber hinaus kann es für einen Mobilfunkbetreiber sinnvoll sein, einen Kunden nicht mit Name und Anschrift zu identifizieren, sondern anhand der dem Kunden zugewiesenen IMSI-Information, d.h. der IMSI-Nummer (IMSI = International Mobile Subscriber Identification), da diese ggf. auch als Identifizierungsmerkmal in den Abrechnungssystemen verwendet wird.

Ferner stellt sich für einen potentiellen Kunden einer Internetdienstleistung immer die Problematik der Vergabe von Benutzernamen und Passwörtern, sofern die Internetdienstleistung zeitlich später erneut genutzt werden können soll.

Sofern ein Kunde mit einem mobilen Endgerät, d.h. einem Telekommunikationsendgerät, welches ein Identitätsmodul umfasst bzw. beinhaltet, im Telekommunikationsnetz eines Mobilfunkbetreibers eingebucht ist, so ist es für den Mobilfunkbetreiber einfach möglich den Kunden zu identifizieren, da der Mobilfunkbetreiber alle Netzelemente des Telekommunikationsnetzes kontrolliert. Somit kann z.B. die vergebene IP Adresse als Identifizierungsmerkmal verwendet werden.

Wenn der Mobilfunkbetreiber jedoch Dienste außerhalb seines geschlossenen Netzwerkes anbieten möchte (um z.B. sicherheitskritische Komponenten aus dem inneren Kernnetz herauszuhalten, oder um eine Dienstleistung nicht nur für Kunden, sondern auch für Nicht-Kunden anbieten zu können), treten dieselben Probleme auf, die auch ein externer Dienstanbieter hat.

Aus dem Stand der Technik sind sogenannte asymmetrische kryptographische Verfahren bekannt, bei denen jede der kommunizierenden Parteien ein Schlüsselpaar besitzt, das aus einem geheimen Teil (privater Schlüssel) und einem nicht geheimen Teil (öffentlicher Schlüssel) besteht. Der öffentliche Schlüssel ermöglicht es jedem (d.h. einem Dritten, der den öffentlichen Schlüssel kennt), Daten für den Inhaber des privaten Schlüssels zu verschlüsseln. Der private Schlüssel ermöglicht es seinem Inhaber, mit dem öffentlichen Schlüssel verschlüsselte Daten zu entschlüsseln. Der private Schlüssel ermöglicht es dem Inhaber ferner, Daten zu signieren, wobei ein Dritter, der den öffentlichen Schlüssel kennt, die solchermaßen generierte Signatur überprüfen kann. Hierfür werden die Daten vom Inhaber des privaten Schlüssels mit dem privaten Schlüssel verschlüsselt. Der öffentliche Schlüssel ermöglicht es dann dem Dritten, die Echtheit dieser mit dem privaten Schlüssel signierten (d.h. verschlüsselten) Daten zu verifizieren, indem die Daten mit dem öffentlichen Schlüssel entschlüsselt werden und mit den ebenfalls übermittelten Daten im Klartext verglichen werden. Im Gegensatz zu einem symmetrischen kryptographische Verfahren müssen die kommunizierenden Parteien keinen gemeinsamen geheimen Schlüssel kennen. Dokument EP 1 365 537 A1 offenbart ein tragbares elektronisches Sicherheitsmodul bestehend aus einem gespeicherten geheimen privaten Kundenschlüssel, einem Signierungsmodul, einem gespeicherten geheimen privaten Schlüssel eines zweiten digitalen Schlüsselpaars, und einem im Signierungsmodul angebrachten Zertifizierungsmodul.

### Offenbarung der Erfindung

Der Erfindung liegt die Aufgabe zugrunde, ein Verfahren zur Authentisierung eines Telekommunikationsendgeräts an einer Servereinrichtung anzugeben, das einfach und kostengünstig durchführbar ist und dennoch ein hohes Maß an Sicherheit gegenüber Betrugsversuchen bzw. sonstigen Manipulationen bietet.

Diese Aufgabe wird erfindungsgemäß gemäß einer ersten Ausführungsform gelöst durch ein Verfahren zur Authentisierung eines Telekommunikationsendgeräts umfassend ein Identitätsmodul an einer Servereinrichtung eines Telekommunikationsnetzes, wobei eine dem Identitätsmodul eindeutig zugeordnete Identitätsinformation zur Authentisierung unter Nutzung der Eigenschaften eines asymmetrischen kryptographischen Verfahrens herangezogen wird, wobei dem Identitätsmodul ein erstes Schlüsselpaar, umfassend einen ersten öffentlichen Schlüssel und einen ersten privaten Schlüssel, zugeordnet ist, wobei der Servereinrichtung ein zweites Schlüsselpaar, umfassend einen zweiten öffentlichen Schlüssel und einen zweiten privaten Schlüssel, zugeordnet ist, wobei das Verfahren die folgenden Schritte aufweist:
-- in einem ersten Verfahrensschritt wird in einem Speicherbereich des Identitätsmoduls
   -- der erste private Schlüssel abgespeichert,
   -- der erste öffentliche Schlüssel abgespeichert und
   -- eine erste Signatur abgespeichert, wobei die erste Signatur durch Signierung des ersten öffentlichen Schlüssels mittels des zweiten privaten Schlüssels gemäß des kryptographischen Verfahrens vorgesehen ist,
-- in einem zweiten Verfahrensschritt wird die dem Identitätsmodul eindeutig zugeordnete Identitätsinformation vom Identitätsmodul generiert und eine zweite Signatur generiert, wobei die zweite Signatur durch Signierung der Identitätsinformation mittels des ersten privaten Schlüssels gemäß des kryptographischen Verfahrens vorgesehen ist,
-- in einem dritten Verfahrensschritt wird der erste öffentliche Schlüssel, die Identitätsinformation, sowie die erste und zweite Signatur an die Servereinrichtung übertragen,
-- in einem vierten Verfahrensschritt wird von der Servereinrichtung
   -- die Authentizität des ersten öffentlichen Schlüssels mittels des zweiten öffentlichen Schlüssels verifiziert und
   -- die Authentizität der Identitätsinformation mittels des verifizierten ersten öffentlichen Schlüssels überprüft.

Diese Aufgabe wird erfindungsgemäß gemäß einer zweiten Ausführungsform ferner auch gelöst durch ein Verfahren zur Authentisierung eines Telekommunikationsendgeräts umfassend ein Identitätsmodul an einer Servereinrichtung eines Telekommunikationsnetzes, wobei eine dem Identitätsmodul eindeutig zugeordnete Identitätsinformation zur Authentisierung unter Nutzung der Eigenschaften eines asymmetrischen kryptographischen Verfahrens herangezogen wird, wobei dem Identitätsmodul ein erstes Schlüsselpaar, umfassend einen ersten öffentlichen Schlüssel und einen ersten privaten Schlüssel, zugeordnet ist, wobei der Servereinrichtung ein zweites Schlüsselpaar, umfassend einen zweiten öffentlichen Schlüssel und einen zweiten privaten Schlüssel, zugeordnet ist, wobei das Verfahren die folgenden Schritte aufweist:
-- in einem ersten Verfahrensschritt wird in einem Speicherbereich des Identitätsmoduls
   -- der erste private Schlüssel abgespeichert und
   -- der erste öffentliche Schlüssel in verschlüsselter Form abgespeichert, wobei die Verschlüsselung des ersten öffentlichen Schlüssels mittels des zweiten privaten Schlüssels gemäß des kryptographischen Verfahrens vorgesehen ist,
-- in einem zweiten Verfahrensschritt wird die dem Identitätsmodul eindeutig zugeordnete Identitätsinformation in verschlüsselter Form vom Identitätsmodul generiert, wobei die Verschlüsselung der Identitätsinformation mittels des ersten privaten Schlüssels gemäß des kryptographischen Verfahrens vorgesehen ist,
-- in einem dritten Verfahrensschritt wird der erste öffentliche Schlüssel in verschlüsselter Form und die Identitätsinformation in verschlüsselter Form an die Servereinrichtung übertragen,
-- in einem vierten Verfahrensschritt wird von der Servereinrichtung
   -- der verschlüsselte erste öffentliche Schlüssel mittels des zweiten öffentlichen Schlüssels entschlüsselt und
   -- die Identitätsinformation mittels des entschlüsselten ersten öffentlichen Schlüssels entschlüsselt.

Gemäß beider Ausführungsformen ist es erfindungsgemäß in vorteilhafter Weise möglich, dass sowohl für Mobilfunkbetreiber, die ihre Kunden über das Internet identifizieren möchten, als auch für externe Dienstanbieter, die in Zusammenarbeit mit einem Mobilfunkbetreiber Kunden sicher erkennen möchten, ein hohes Maß an Sicherheit und gleichzeitig ein hohes Maß an Benutzerkomfort gegeben ist, weil die Verwaltung und Erinnerung einer Vielzahl von Benutzernamen und Passwörtern entfällt.

Gemäß der vorliegenden Erfindung ist es gemäß beider Ausführungsformen auf kryptographisch sichere Weise möglich, einen Kunden des Mobilfunkunternehmens anhand einer Identitätsinformation, beispielsweise seiner einmaligen IMSI, zu identifizieren. Theoretisch könnte eine Applikation in einem modernen mobilen Endgerät die Identitätsinformation, insbesondere die IMSI, ebenfalls von dem Identitätsmodul, insbesondere der SIM Karte, lesen, jedoch kann diese Identitätsinformation nach Belieben von der mobilen Applikation manipuliert werden. Damit ist ein solches Verfahren unter dem Gesichtspunkt eines möglichst hohen Sicherheitsniveaus wenig hilfreich.

Eine Applikation, die von einem Mobilfunkunternehmen herausgegeben wird, wird die Identitätsinformation (insbesondere die IMSI) typischerweise ohne Manipulation weiterleiten. Jedoch ist es bei den heutigen intelligenten Mobilfunkgeräten (Telekommunikationsendgeräten) möglich, Applikationen einzuschmuggeln, die entweder die Kommunikation von anderen Applikationen mit dem Identitätsmodul (insbesondere der SIM-Karte) belauschen und ggf. manipulieren. Eine andere Manipulationsmöglichkeit besteht darin, dass eine (eingeschmuggelte) Applikation sich in den TCP/IP Kommunikations-Stack auf dem mobilen Endgerät einklinkt und die Kommunikation der Applikation des Mobilfunkunternehmens mit einem Server bzw. mit einer Servereinrichtung im Internet manipuliert. Erfindungsgemäß ist es demgegenüber vorteilhaft möglich, dass in manipulationssicherer Weise eine Übertragung der Identitätsinformation (insbesondere der IMSI) vom Telekommunikationsendgerät (insbesondere dem Identitätsmodul des Telekommunikationsendgeräts bzw. insbesondere der SIM-Karte) über eine im mobilen Telekommunikationsendgerät enthaltene Applikation zu einem Server bzw. einer Servereinrichtung im Internet gewährleistet werden kann.

Die SIM Karte wird im Folgenden als prominentes Beispiel für ein Identitätsmodul verwendet. Daher wird im Folgenden die Bezeichnung "SIM-Karte" und "Identitätsmodul" synonym verwendet. Die SIM-Karte ist ein allgemein anerkannter sicherer Speicherplatz für Daten jeglicher Art. Zusätzlich beherrschen moderne SIM-Karten mit einer SmartCard-Funktionalität (solche SIM-Karten werden im Folgenden auch als SmartCards bezeichnet) - ggf. unterstützt durch einen Coprozessor für kryptografische Berechnungen - komplexe kryptografische Rechenoperationen. Diese Berechnungen können mit symmetrischen Verschlüsselungsverfahren (wie z.B. 3DES oder AES) oder asymmetrisch (RSA / elliptische Kurven) durchgeführt werden. Weiterhin besitzen moderne Smart Cards einen Generator für qualitativ hochwertige Zufallszahlen. Dadurch ist die SIM Karte in der Lage, ein Schlüsselpaar für asymmetrische RSA-Operationen "on-Board" zu berechnen, d.h. ohne auf Rechenresourcen bzw. Prozessorresourcen außerhalb der SIM-Karte zurückgreifen zu müssen. Da bei diesem Verfahren die geheimen Schlüssel innerhalb der SIM-Karte verbleiben, wird die Sicherheit solcher Verfahren erheblich erhöht.

Die drei Eigenschaften - sicherer Speicher, kryptographische Funktionalität, sichere Generierung von Zufallszahlen - besitzt jede derzeit gebräuchliche, moderne SIM Karte im Banking- oder Telekommunikationsumfeld. Wenn im Folgenden von SIM Karten gesprochen wird, so ist dieses Synonym auch für Karten aus dem Bankingumfeld (d.h. für Bankanwendungen) zu verstehen. Die Benutzung des Krypto-Coprozessors ist optional, er beschleunigt die Erzeugung von asymmetrischen Schlüsselpaaren deutlich sowie asymmetrische Berechnungen, insbesondere Ver- bzw. Entschlüsselungen. Dabei ist die Erhöhung der Rechengeschwindigkeit umso größer, je mehr Daten ver- oder entschlüsselt werden müssen.

Erfindungsgemäß ist es besonders vorteilhaft, dass die Verwendung der IMSI als Identitätsinformation in einem doppelten Sinn verwendbar ist: Nämlich zum einen als Identitätsinformation (d.h. zur Identifizierung des Kunden bzw. Nutzers des Telekommuniaktionsnetzes) und zum anderen zur Authentisierung; der Kunde bzw. Nutzers des Telekommunikationsnetzes kann die Authentiisierungsnachricht nur dann versenden, wenn die damit in Zusammenhang stehende IMSI auch gültig ist, d.h. nicht vom Netzbetreiber des Telekommunikationsnetzes gesperrt wurde. Erfindungsgemäß ist es insbesondere vorteilhaft möglich, dass eine Identifizierung über beliebig manipulierbare Netzwerkstrukturen hinweg möglich ist.

Erfindungsgemäß ist es insbesondere vorteilhaft, dass die Identitiätsinformation, d.h. die IMSI, originärer Bestandteil der Kundendaten ist (und dass der Sicherheitsmechanismus nicht - wie bei anderen Verfahren mit erhöhten Sicherheitsanforderungen - darauf beruht, dass eine Entschlüsselung einer Nachricht mit einem öffentlichen Zertifikat erfolgt). Der Authentizitätsnachweis erfolgt erfindungsgemäß durch Entschlüsselung des öffentlichen SIM Schlüssels mittels des privaten Service Schlüssels; die Entschlüsselung der SIM-Nachricht mittels des öffentlichen SIM-Schlüssels.

Gemäß der vorliegenden Erfindung ist das Sicherheitsmedium ausschließlich die SIM-Karte. Diese ist erfindungsgemäß deshalb möglich, weil die SIM-Karte die IMSI-Information, d.h. die Identitätsinformation, immer enthält bzw. enthalten muss. Erfindungsgemäß ist in Bezug auf Schutzmaßnahmen durch die Verwendung der IMSI als Identitätsinformation vorteilhaft möglich, dass bei Vorliegen von Verdachtsmomenten die IMSI seitens des Netzbetreibers einfach gesperrt werden kann, so dass die Nachricht gar nicht vom mobilen Endgerät abgeschickt werden kann.

Die Erfindung verwendet gemäß beider Ausführungsformen eine mehrfache Kombination der oben beschriebenen Eigenschaften um manipulationssicher, eindeutig und unabstreitbar die Verwendung eines Identitätsmoduls (bzw. dessen eindeutige Identitätsinformation) und mithin einen Kunden zu identifizieren. Diese Kundenidentifikation soll stattfinden auf einem Server, der z.B. über das Internet oder ein Mobilfunknetz erreichbar ist. Dieser Server bietet einen beliebigen Dienst an, der es erfordert oder der es zumindest als zuträglich erscheinen lässt den Kunden (bzw. die Identitätsinformation) sicher zu authentifizieren (z.B. zur Erstellung von Rechnungen, zur Durchführung von Zahlungen oder dergleichen).

Die Vorbereitungen zum Einsatz der Kundenauthentisierung gemäß der vorliegenden Erfindung finden statt bei einem Hersteller des Identitätsmoduls, d.h. insbesondere dem SIM-Karten Hersteller. Diese verfügen über zertifizierte Sicherheitsbereiche, in denen die SIM-Karten unter kontrollierten Bedingungen hergestellt werden.

Zur Verwaltung der Daten und als Steuereinheit für die Datenverarbeitung auf der SIM-Karte dient ein Programm, welches auf der SIM-Karte ausgeführt wird. Als Laufzeitumgebung ist in allen modernen SIM-Karten eine Java Card™ Umgebung enthalten. Diese Laufzeitumgebung zeichnet sich durch erhöhte Sicherheitsanforderungen gegenüber dem auf Arbeitsplatzrechnern, Privatrechnern oder Servern bekannten Java aus. So sind z.B. alle in einer SIM-Karte enthaltenen Applikationen (in diesem Umfeld werden sie als Applet bezeichnet), durch eine von der Laufzeitumgebung kontrollierte Firewall voneinander isoliert.

Der Source Code des für die Erfindung benutzten Applets kann durchaus veröffentlicht werden, die Sicherheit der Erfindung ist begründet durch die verwendeten kryptografischen Verfahren.

Bei der vorliegenden Erfindung werden zwei asymmetrische Schlüsselpaare verwendet: zum einen ein (erstes) Schlüsselpaar, welches dem Identitätsmodul zugeordnet ist und insbesondere innerhalb des Identitätsmoduls, d.h. innerhalb der SIM-Karte, generiert wird. Dieses erste Schlüsselpaar wird im Folgenden auch als das SIM-Schlüsselpaar genannt. Das erste Schlüsselpaar umfasst einen ersten öffentlichen Schlüssel und einen ersten privaten Schlüssel. Entsprechend der Bezeichnung SIM-Schlüsselpaar wird der erste öffentliche Schlüssel nachfolgend auch öffentlicher SIM-Schlüssel und der erste private Schlüssel nachfolgend auch privater SIM-Schlüssel genannt. Das zweite Schlüsselpaar ist gemäß der vorliegenden Erfindung der Servereinrichtung zugeordnet. Dieses zweite Schlüsselpaar wird im Folgenden auch das Server-Schlüsselpaar genannt. Das zweite Schlüsselpaar umfasst einen zweiten öffentlichen Schlüssel und einen zweiten privaten Schlüssel. Entsprechend der Bezeichnung Server-Schlüsselpaar wird der zweite öffentliche Schlüssel nachfolgend auch öffentlicher Server-Schlüssel und der zweite private Schlüssel nachfolgend auch privater Server-Schlüssel genannt. Von dem zweiten Schlüsselpaar wird bei der Herstellung der SIM-Karte der private Server-Schlüssel benötigt und bei der Authentisierung des Kunden auf dem Server der öffentliche Server-Schlüssel.

Gemäß der vorliegenden Erfindung ist es bevorzugt, dass beim SIM-Kartenhersteller zunächst ein Applet in die SIM-Karte geladen und dort installiert wird. Danach wird innerhalb der SIM-Karte ein asymmetrisches Schlüsselpaar generiert, welches dem Identitätsmodul zugeordnet wird, d.h. das erste Schlüsselpaar. Als nächstes wird gemäß einer bevorzugten Ausführung der vorliegenden Erfindung der private Server-Schlüssel des Server-Schlüsselpaares in die SIM-Karte geladen und der öffentliche SIM-Schlüssel mit dem privaten Server-Schlüssel signiert (gemäß der ersten Ausführungsform) oder verschlüsselt (gemäß der zweiten Ausführungsform). Sofort danach wird der Server Schlüssel in der SIM-Karte wieder gelöscht. Alternativ dazu könnte auch der öffentliche SIM-Schlüssel aus der SIM-Karte, insbesondere in ein Hoch-Sicherheitsmodul, exportiert werden, mit dem privaten Server-Schlüssel signiert (gemäß der ersten Ausführungsform) oder verschlüsselt (gemäß der zweiten Ausführungsform) werden und anschließend das Ergebnis dieser Operation wieder in die SIM-Karte zurückgespeichert werden.

Zur Identifizierung der SIM-Karte bzw. des Kunden (im Betrieb der SIM-Karte bzw. bei deren Benutzung) sendet eine Applikation im mobilen Endgerät, in welches die SIM-Karte eingelegt ist, ein Kommando an die SIM Karte. Daraufhin liest die SIM Karte die Identitätsinformation, erfindungsgemäß insbesondere die IMSI-Information bzw. IMSI-Nummer, aus der öffentlich zugänglichen Verzeichnisstruktur innerhalb des Speicherbereichs der SIM-Karte aus. Die Identitätsinformation (bzw. IMSI-Nummer) ist dort so abgespeichert, dass sie von außen - insbesondere nach der Eingabe einer vertraulichen Information, beispielsweise der SIM-PIN (SIM Personal Identifikation Number) - lesbar ist, aber niemals überschrieben werden kann.

Gemäß der vorliegenden Erfindung ist es ferner bevorzugt, dass zur Generierung der Identitätsinformation und deren Signatur (zweite Signatur gemäß der ersten Ausführungsform) (bzw. gemäß der zweiten Ausführungsform zur Generierung der Identitätsinformation in verschlüsselter Form) folgendermaßen vorgegangen wird: Nachdem die Identitätsinformation, insbesondere die IMSI, gelesen wurde, stößt das in die SIM-Karte geladene Applet (d.h. Programm) die Erzeugung einer sicheren Zufallszahl mit z.B. 16 Zeichen Länge an und stellt diese an den Beginn der Antwortnachricht. Danach wird die Identitätsinformation, d.h. insbesondere die IMSI-Nummer, in die Antwortnachricht kopiert und (gemäß der ersten Ausführungsform) aus der Antwortnachricht mittels einer geeigneten mathematischen Einweg-Funktion ein Hash (Streuwert) gebildet. Dieser wird in einem folgenden Schritt am Ende mit Füllbytes aufgefüllt, bis die für eine Verschlüsselungsoperation mit dem asymmetrischen privaten SIM-Schlüssel notwendige Länge erreicht ist. Alternativ dazu ist es gemäß der zweiten Ausführungsform auch möglich, dass nach der Erzeugung der sicheren Zufallszahl mit z.B. 16 Zeichen Länge und deren Einstellen an den Beginn der Antwortnachricht die IMSI-Nummer kopiert wird und die Antwortnachricht am Ende mit Füllbytes aufgefüllt wird, bis die für eine Verschlüsselungsoperation mit dem asymmetrischen privaten SIM-Schlüssel notwendige Länge erreicht ist.

Bei beiden Ausführungsformen wird zur Verhinderung von Replay-(Wiedereinspielungs-)Angriffen der Wert eines Zählers bzw. ein Zählerwert in die Nachricht aufgenommen, wobei der Wert des Zählers bzw. der Zählerwert für jede neu erzeugte Nachricht geändert wird, beispielsweise erhöht oder vermindert oder (in vorgegebener Weise) anderweitig verändert wird.

Alle in der Nachricht enthaltenen Daten (d.h. insbesondere auch die IMSI und der Zählerwert und) werden gemäß beider Ausführungsformen bevorzugt nicht direkt hintereinander in der Antwortnachricht abgelegt, sondern jeweils in Form einer TLV - formatierten Liste (TAG Length Value) gespeichert, d.h. in einem strukturierten Format dergestalt, dass zur Übertragung längenvariabler Datenfelder zunächst
-- eine Kennung (d.h. einen Bezeichner, bzw. im englischen Sprachgebrauch einen "Identifier" bzw. ein "Tag") gespeichert wird,
-- anschließend ein numerische Längenangabe, in der die Anzahl der Zeichen bzw. Bytes angegeben wird, die dem nachfolgenden Nutzdateninhalt entspricht,
-- und schließlich die Zeichen bzw. Bytes bzw. der Informationsinhalt der Nutzdaten selbst. Die drei verschiedenen Daten werden jeweils durch einen anderen Bezeichner (bzw. ein anderes "Tag") identifiziert. Nach dem Bezeichner (bzw. dem "Tag") folgt die Längenangabe des eigentlichen Datums und darauf der Dateninhalt bzw. dieses selber.

Um gemäß der vorliegenden Erfindung die Unabstreitbarkeit der Authentisierung des Kunden (bzw. des Identitätsmoduls) zu erreichen, ist es erfindungsgemäß bevorzugt vorgesehen, dass der Kunde vor der abschließenden Signatur (gemäß der ersten Ausführungsform) bzw. der Verschlüsselung (gemäß der zweiten Ausführungsform) der Antwortdaten (bzw. der Antwortnachricht) eine vertrauliche Information (insbesondere eine PIN-Nummer bzw. PIN-Information) eingeben muss. Die Eingabe der vertraulichen Information (bzw. der PIN-Nummer bzw. PIN-Information) kann auf unterschiedliche Weise erfolgen, ja sogar auf einem anderen logischen Kommunikationskanal als derjenige, der für die Anfrage und Entgegennahme der Authentisierungsnachricht verwendet wird. Dadurch kann die Wahrscheinlichkeit für Angriffe bzw. deren Erfolgsrate weiter verringert werden. Die vertrauliche Information (bzw. PIN-Nummer oder PIN-Information) ist grundsätzlich innerhalb der SIM-Karte gespeichert und der Vergleich mit der Eingabe (insbesondere mittels einer Benutzerschnittstelle des Telekommunikationsendgeräts des Kunden) der vertraulichen Information seitens des Kunden erfolgt ebenfalls bevorzugt ausschließlich in der Karte.

Zunächst kann die Applikation auf dem Telekommunikationsendgerät den Kunden bitten, insbesondere mittels einer Benutzerschnittstelle des Telekommunikationsendgeräts, eine vertrauliche Information, insbesondere eine PIN-Information, einzugeben. Dann sendet diese Applikation den Authentisierungswunsch zusammen mit der vom Kunden eingegebenen vertraulichen Information (bzw. PIN-Information) an das Applet in der SIM-Karte. Nach erfolgreicher Prüfung der vertraulichen Information erzeugt das Applet innerhalb der SIM-Karte gemäß der ersten Ausführungsform die Signatur der Antwortnachricht bzw. gemäß der zweiten Ausführungsform die verschlüsselte Antwortnachricht.

Im Telekommunikationsumfeld beherrschen alle SIM-Karten und mobilen Endgeräte (bzw. Telekommunikationsendgeräte) ein Protokoll, welches sich SIM-Toolkit nennt. Dieses erlaubt der SIM-Karte Kommandos an das Telekommunikationsendgerät zu senden und von diesem Antworten entgegenzunehmen. Gemäß der vorliegenden Erfindung kann jedes Applet in einer SIM-Karte sowohl über die für die vorliegende Erfindung verwendete APDU-Schnittstelle (bzw. APDU-Interface, application protocol data unit interface) als auch über die SIM-Toolkit Schnittstelle (bzw. SIM-Toolkit Interface) mit einem mobilen Endgerät kommunizieren. Es ist erfindungsgemäß auch möglich und bevorzugt, dass beide Kommunikationskanäle abwechselnd nacheinander verwendet werden.

Als zweiter Kanal kann die Eingabe der vertraulichen Information (bzw. die PIN Eingabe) über SIM-Toolkit erfolgen. Dieser Kommunikationskanal endet logisch bereits im Modem des mobilen Endgerätes; somit erscheinen SIM Toolkit Kommandos nicht auf dem üblicherweise zwischen Applikation und SIM Karte verwendeten Kommunikationskanal. Dieses erhöht die Sicherheit von SIM Toolkit Kommandos gegenüber betrügerischen bzw. bösartigen Applikationen auf dem mobilen Endgerät.

Bei der vorliegenden Erfindung sendet beispielsweise die SIM-Karte das SIM Toolkit Kommando "Get Input" an das mobile Endgerät, d.h. an das Telekommunikationsendgerät. Bestandteil dieses Kommandos ist ein Text, mit dem der Benutzer zur Eingabe der vertraulichen Information (d.h. zur PIN Eingabe) aufgefordert wird, z.B. "Bitte PIN für den Identifizierungsdienst eingeben". Weiterhin kann in diesem SIM Toolkit Kommando eine Option eingestellt werden, dass das mobile Endgerät die vom Benutzer eingegebenen Ziffern nicht anzeigt, sondern durch '*' verdeckt. Nachdem der Benutzer die vertrauliche Information (d.h. insbesondere die PIN-Information) eingegeben hat, sendet das mobile Endgerät die Antwort an die Karte, welche nun die vertrauliche Information (d.h. die PIN-Information) prüfen kann.

Gemäß der vorliegenden Erfindung ist es (gemäß beider Ausführungsformen) ferner bevorzugt vorgesehen, dass in der gemäß dem zweiten Verfahrensschritt generierten Antwortnachricht bzw. in der gemäß dem dritten Verfahrensschritt übertragenen Antwortnachricht an die Servereinrichtung ein Informationselement enthalten ist, welches (die Servereinrichtung) darüber informiert, ob und auf welchem Kommunikationskanal eine PIN Prüfung stattgefunden hat. Dieses Informationselement ist in der Antwortnachricht bevorzugt in TLV-kodierter Form enthalten.

Nachdem im dritten Verfahrensschritt gemäß der ersten Ausführungsform der vorliegenden Erfindung die Nachricht von der Applikation auf dem mobilen Endgerät, insbesondere über das Internet, an die Servereinrichtung gesendet wurde, kann die Servereinrichtung mittels des öffentlichen Server-Schlüssels die Authentizität des öffentlichen SIM-Schlüssel überprüfen, indem die Signatur des öffentlichen SIM-Schlüssels verifiziert wird. Mit diesem öffentlichen SIM-Schlüssel kann die Servereinrichtung die Authentizität der signierten Daten, d.h. die Antwortnachricht des Telekommunikationsendgeräts, welche insbesondere die Identitätsinformation - jedoch bevorzugt noch weitere Informationen wie beispielsweise die Information ob (und wenn ja, wie) eine Überprüfung einer vertraulichen Information (PIN-Prüfung) durchgeführt wurde - (d.h. insbesondere die IMSI-Nummer) enthalten, überprüfen. Die Prüfung der Authentizität von Daten erfolgt bevorzugt durch Entschlüsselung des Hashwertes der Signatur mit dem öffentlichen Schlüssel und einem anschließenden Vergleich des so erhaltenen Hashwertes mit einem über die im Klartext vorliegenden Daten neu berechneten Hashwert.

Für die zweite Ausführungsform gilt Folgendes: Nachdem im dritten Verfahrensschritt der vorliegenden Erfindung die verschlüsselte Nachricht von der Applikation auf dem mobilen Endgerät, insbesondere über das Internet, an die Servereinrichtung gesendet wurde, kann die Servereinrichtung mittels des öffentlichen Server-Schlüssels den verschlüsselten öffentlichen SIM-Schlüssel entschlüsseln. Mit diesem (jetzt entschlüsselten) öffentlichen SIM-Schlüssel kann die Servereinrichtung die verschlüsselten Daten, d.h. die verschlüsselte Antwortnachricht des Telekommunikationsendgeräts, welche insbesondere die Identitätsinformation - jedoch bevorzugt noch weitere Informationen wie beispielsweise die Information ob (und wenn ja, wie) eine Überprüfung einer vertraulichen Information (PIN-Prüfung) durchgeführt wurde - (d.h. insbesondere die IMSI-Nummer) enthalten, entschlüsseln. Wenn beide Entschlüsselungsoperationen erfolgreich waren, liegt die Identitätsinformation (d.h. insbesondere die IMSI-Nummer) im Klartext in der Servereinrichtung vor, die sie nun für weitere Operationen verwenden kann.

Der Server kann anhand der übermittelten und eindeutigen Identitätsinformation (insbesondere der eindeutigen IMSI-Nummer) den Kunden bzw. das Identitätsmodul identifizieren, beispielsweise Zahlungsvorgänge anstoßen und/oder der Applikation auf dem mobilen Endgerät mitteilen, dass die notwendigen Voraussetzungen zum Freischalten der vollen Funktionsfähigkeit der Applikation gegeben sind (automatische Umwandlung einer Trial- in eine Vollversion) oder weitere Aktionen seitens der Servereinrichtung oder seitens der Applikation anstoßen.

Die Sicherheit bei der vorliegenden Erfindung beruht auf der Erkenntnis, dass asymmetrische kryptografische Verfahren nach derzeitiger Kenntnis bei Wahl eines ausreichend langen Schlüsselpaares nicht oder nur mit einem unverhältnismäßig großen Aufwand gebrochen werden können.

Bei der vorliegenden Erfindung ist besonders hervorzuheben, dass sowohl die Authentizität (bei der ersten Ausführungsform) bzw. die Vertraulichkeit (bei der zweiten Ausführungsform) der übermittelten Daten gewährleistet ist als auch gewährleistet ist, dass in nicht-abstreitbarer Form die Feststellung getroffen werden kann, dass die von der SIM-Karte des Kunden bzw. Benutzers übermittelte Identitätsinformation (insbesondere die IMSI-Nummer) tatsächlich von diesem Identitätsmodul (d.h. dieser SIM-Karte) stammt und (insbesondere bei der Variante mit erzwungener Eingabe der vertraulichen Information, beispielsweise in Form einer PIN-Information) der Kunde bzw. der Benutzer Kenntnis von diesem Vorgang haben musste.

Durch Reduktion der z.B. bei RSA Kryptosystemen verwendeten Rechenvorschriften auf das für die vorliegende Erfindung notwendige Mindestmaß ist es erfindungsgemäß in vorteilhafter Weise möglich, auf die Einrichtung komplexer PKI-Systeme, wie sie ansonsten notwendig sind (insbesondere um zurückgezogene Zertifikate erkennen zu können), zu verzichten, aber dennoch die Vorteile des erhöhten Sicherheitsniveaus, das mit der Verwendung der Prinzipien von RSA Kryptosystemen einhergeht, nutzen zu können. Darüber hinaus können alle notwendigen Rechenschritte innerhalb der SIM Karte ausgeführt werden und stehen dem Kunden bzw. dem Benutzer somit überall und jederzeit zur Verfügung. Weiterhin kann hierdurch erfindungsgemäß der Angriffsvektor verringert werden bzw. ganz vermieden werden, weil die SIM-Karte nur von außerhalb einen Anstoß zur Erzeugung der sicheren Nachricht erhält und die SIM-Karte alle notwendigen Daten, Schlüssel und kryptographischen Verfahren manipulationssicher und manipulationsgeschützt bereits enthält. Auch hinsichtlich der Lebensdauer ist die Verwendung der SIM-Karte erfindungsgemäß vorteilhaft, weil eine Nutzung möglich ist, solange die SIM-Karte technisch funktioniert, nicht jedoch davon abhängig ist, wie etwa eine Laufzeit bzw. Gültigkeitsdauer einer Kreditkarte ist.

Weiterhin ist es erfindungsgemäß in vorteilhafter Weise möglich, dass auf den Einsatz von von Dritten, beispielsweise einem Trustcenter, zertifizierten Zertifikaten verzichtet werden kann. Diese belegen mehrere KB (Kilobyte, d.h. mehrmals 1024 Bytes) an Speicher auf der SIM-Karte. Dieser Speicher ist, verglichen mit anderen Halbleiterbausteinen, bei der SIM-Karte sehr teuer und deshalb nur in der notwendigen Mindestgröße vorhanden.

Erfindungsgemäß ist es bevorzugt vorgesehen, dass das Telekommunikationsendgerät eine Benutzerschnittstelle aufweist, wobei zeitlich vor oder während des zweiten Verfahrensschritts eine Benutzereingabe einer vertraulichen Information über die Benutzerschnittstelle des Telekommunikationsendgeräts vorgesehen ist.

Ferner ist es erfindungsgemäß sowohl gemäß der ersten Ausführungsform als auch gemäß der zweiten Ausführungsform bevorzugt vorgesehen, dass die Übertragung im dritten Verfahrensschritt mittels eines Verschlüsselungsprotokolls erfolgt, beispielsweise eines SSL-Verschlüsselungsprotokolls (Secure Socket Layer) bzw. eines TLS-Verschlüsselungsprotokolls (Transport Layer Security).

Die Sicherheit bei der Durchführung des erfindungsgemäßen Verfahrens kann hierdurch nochmals erhöht werden.

Ferner ist es erfindungsgemäß sowohl gemäß der ersten Ausführungsform als auch gemäß der zweiten Ausführungsform bevorzugt vorgesehen dass bei der Übertragung im dritten Verfahrensschritt zusätzlich eine Zählerinformation übertragen wird, wobei es die Übertragung der Zählerinformation der Servereinrichtung gestattet, die Übertragung einer zeitlich vorangehenden ersten Nachrichtenübertragung gemäß dem dritten Verfahrensschritt von einer zeitlich nachfolgenden zweiten Nachrichtenübertragung gemäß dem dritten Verfahrensschritt, insbesondere unter Verwendung einer in der Servereinrichtung vorhandenen oder der Servereinrichtung zugeordneten Datenbank, zu unterscheiden.

Hierdurch kann gewährleistet werden, dass die Sicherheit des erfindungsgemäßen Verfahrens weiter verbessert wird. Dies wird beispielsweise dadurch erreicht, dass (bei beiden Ausführungsformen) der Server (d.h. die Servereinrichtung) nach erfolgter Prüfung der Signaturen (gemäß der ersten Ausführungsform) bzw. nach Entschlüsselung der Nachrichten (gemäß der zweiten Ausführungsform) den Wert des Zählers (bzw. den Zählerwert) der gerade empfangenen Nachricht mit dem Wert der letzten gültigen Nachricht vergleicht. Dieser ältere Zählerwert wird bevorzugt in einer (entweder in der Servereinrichtung angeordneten oder aber der Servereinrichtung zugeordneten) Datenbank gespeichert und wird der in der Nachricht enthaltenen IMSI zugeordnet. Die neue Nachricht wird nur dann als gültig angesehen, wenn der neue Zählerwert sich vom alten (d.h. direkt vorangehenden) Zählerwert (und bevorzugt auch von den direkt zuvor für diese IMSI verwendeten Zählerwerte) unterscheidet, beispielsweise größer ist als der alte Zählerwert. In diesem Fall wird der neue Zählerwert in der Datenbank gespeichert. Bevorzugt wird in der Datenbank die IMSI nicht direkt abgespeichert, sondern nur deren mittels eines mathematischen Verfahrens erzeugte Hashwert (Streuwert).

Erfindungsgemäß ist es gemäß der ersten Ausführungsform ferner bevorzugt vorgesehen, dass der Servereinrichtung oder einer weiteren Servereinrichtung ein drittes Schlüsselpaar, umfassend einen dritten öffentlichen Schlüssel und einen dritten privaten Schlüssel, zugeordnet ist,
-- wobei während des ersten Verfahrensschritts in dem Speicherbereich des Identitätsmoduls eine dritte Signatur abgespeichert wird, wobei die dritte Signatur durch Signierung des ersten öffentlichen Schlüssels mit dem dritten privaten Schlüssel gemäß des kryptographischen Verfahrens vorgesehen ist,
-- wobei während des dritten Verfahrensschritts der erste öffentliche Schlüssel sowie die erste und dritte Signatur an die Servereinrichtung übertragen wird, und
-- wobei während des vierten Verfahrensschritts von der Servereinrichtung
   -- die dritte Signatur mittels des dritten öffentlichen Schlüssels geprüft wird und
   -- die erste Signatur mittels des ersten öffentlichen Schlüssels geprüft wird.

Gemäß der zweiten Ausführungsform der Erfindung ist es ferner bevorzugt vorgesehen, dass der Servereinrichtung oder einer weiteren Servereinrichtung ein drittes Schlüsselpaar, umfassend einen dritten öffentlichen Schlüssel und einen dritten privaten Schlüssel, zugeordnet ist,
-- wobei während des ersten Verfahrensschritts in dem Speicherbereich des Identitätsmoduls der erste öffentliche Schlüssel in einer weiteren verschlüsselten Form abgespeichert wird, wobei die weitere verschlüsselte Form des ersten öffentlichen Schlüssels eine Verschlüsselung des ersten öffentlichen Schlüssels mittels des dritten privaten Schlüssels gemäß des kryptographischen Verfahrens ist,
-- wobei während des dritten Verfahrensschritts der erste öffentliche Schlüssel auch in der weiteren verschlüsselten Form an die Servereinrichtung übertragen wird, und
-- wobei während des vierten Verfahrensschritts von der Servereinrichtung
   -- der erste öffentliche Schlüssel in der weiteren verschlüsselten Form mittels des dritten öffentlichen Schlüssels entschlüsselt wird und
   -- die Identitätsinformation mittels des entschlüsselten ersten öffentlichen Schlüssels entschlüsselt wird.

Besonders bevorzugt ist es gemäß sowohl der ersten als auch der zweiten Ausführungsform der vorliegenden Erfindung ferner, dass die Identitätsinformation die IMSI-Information (International Mobile Subscriber Identity) des Identitätsmoduls umfasst.

Erfindungsgemäß ist ferner auch sowohl gemäß der ersten als auch der zweiten Ausführungsform bevorzugt, dass das Identitätsmodul eine SIM-Karte (Subscriber Identity Module) oder eine USIM-Karte (Universal Subscriber Identity Module) ist.

Ein weiterer Gegenstand der vorliegenden Erfindung betrifft eine Verwendung eines Identitätsmoduls bei einem erfindungsgemäßen Verfahren.

Ein weiterer Gegenstand der vorliegenden Erfindung gemäß der ersten Ausführungsform betrifft ferner ein Identitätsmodul zur verbesserten Authentisierung eines Telekommunikationsendgeräts an einer Servereinrichtung eines Telekommunikationsnetzes, wobei eine dem Identitätsmodul eindeutig zugeordnete Identitätsinformation zur Authentisierung unter Nutzung der Eigenschaften eines asymmetrischen kryptographischen Verfahrens vorgesehen ist, wobei dem Identitätsmodul ein erstes Schlüsselpaar, umfassend einen ersten öffentlichen Schlüssel und einen ersten privaten Schlüssel, zugeordnet ist, wobei der Servereinrichtung ein zweites Schlüsselpaar, umfassend einen zweiten öffentlichen Schlüssel und einen zweiten privaten Schlüssel, zugeordnet ist, wobei in einem Speicherbereich des Identitätsmoduls
-- der erste private Schlüssel abgespeichert ist,
-- der erste öffentliche Schlüssel abgespeichert ist und,
-- eine erste Signatur abgespeichert ist, wobei die erste Signatur durch Signierung des ersten öffentlichen Schlüssels mittels des zweiten privaten Schlüssels gemäß des kryptographischen Verfahrens vorgesehen ist,
wobei ferner eine zweite Signatur vorgesehen ist, wobei die zweite Signatur durch Signierung der dem Identitätsmodul eindeutig zugeordneten Identitätsinformation mittels des ersten privaten Schlüssels gemäß des kryptographischen Verfahrens vorgesehen ist, so dass seitens der Servereinrichtung
-- eine Überprüfung der ersten Signatur mittels des zweiten öffentlichen Schlüssels und
-- eine Überprüfung der zweiten Signatur mittels des ersten öffentlichen Schlüssels ermöglicht ist.

Ein weiterer Gegenstand der vorliegenden Erfindung gemäß der zweiten Ausführungsform betrifft ferner ein Identitätsmodul zur verbesserten Authentisierung eines Telekommunikationsendgeräts an einer Servereinrichtung eines Telekommunikationsnetzes, wobei eine dem Identitätsmodul eindeutig zugeordnete Identitätsinformation zur Authentisierung unter Nutzung der Eigenschaften eines asymmetrischen kryptographischen Verfahrens vorgesehen ist, wobei dem Identitätsmodul ein erstes Schlüsselpaar, umfassend einen ersten öffentlichen Schlüssel und einen ersten privaten Schlüssel, zugeordnet ist, wobei der Servereinrichtung ein zweites Schlüsselpaar, umfassend einen zweiten öffentlichen Schlüssel und einen zweiten privaten Schlüssel, zugeordnet ist, wobei in einem Speicherbereich des Identitätsmoduls
-- der erste private Schlüssel abgespeichert ist und
-- der erste öffentliche Schlüssel in verschlüsselter Form abgespeichert ist, wobei die Verschlüsselung des ersten öffentlichen Schlüssels mittels des zweiten privaten Schlüssels gemäß des kryptographischen Verfahrens vorgesehen ist,
wobei ferner eine Generierung durch das Identitätsmodul der dem Identitätsmodul eindeutig zugeordneten Identitätsinformation in verschlüsselter Form vorgesehen ist, wobei die Verschlüsselung der Identitätsinformation mittels des ersten privaten Schlüssels gemäß des kryptographischen Verfahrens vorgesehen ist, so dass seitens der Servereinrichtung
-- eine Entschlüsselung des ersten öffentlichen Schlüssels mittels des zweiten öffentlichen Schlüssels und
-- eine Entschlüsselung der Identitätsinformation mittels des entschlüsselten ersten öffentlichen Schlüssels
ermöglicht ist.

Ferner bezieht sich die vorliegende Erfindung auch auf ein Computerprogramm mit Programmcodemitteln, mit deren Hilfe alle Schritte des erfindungsgemäßen Verfahrens durchführbar sind, wenn das Computerprogramm auf einem Identitätsmodul, einem Computer oder einer entsprechenden Recheneinheit ausgeführt wird.

Weiterhin ist Gegenstand der vorliegenden Erfindung ein Computerprogrammprodukt mit einem computerlesbaren Medium und einem auf dem computerlesbaren Medium gespeicherten Computerprogramm mit Programmcodemitteln, die dazu geeignet sind, dass alle Schritte des erfindungsgemäßen Verfahrens durchführbar sind, wenn das Computerprogramm auf einem Identitätsmodul, einem Computer oder einer entsprechenden Recheneinheit ausgeführt wird.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

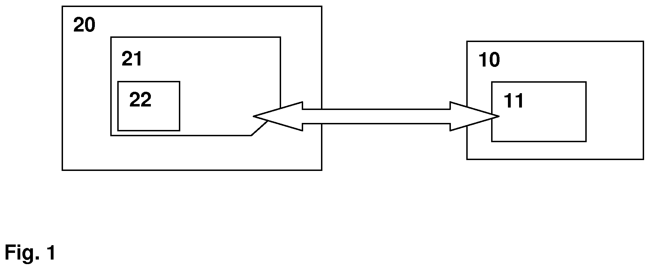

Figur 1 zeigt eine schematische Ansicht eines Telekommunikationsendgeräts umfassend ein Identitätsmodul und eines Telekommunikationsnetzes mit einer Servereinrichtung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

In Figur 1 ist in schematischer Weise ein Telekommunikationsendgerät 20 mit einem Identitätsmodul 21 dargestellt. Das Identitätsmodul 21 weist einen Speicherbereich 22 auf. Das Identitätsmodul 21, welches insbesondere als eine SIM-Karte oder als eine USIM-Karte ausgebildet ist, ist derart vorgesehen, dass in sicherer Weise ein Informationsaustausch mit einer Servereinrichtung 11 eines Telekommunikationsnetzes 10 (beispielsweise das Internet) stattfinden kann, der zur Authentisierung des Identitätsmoduls 21 bzw. damit des Telekommunikationsendgeräts 20 bzw. dessen Benutzer bei der Servereinrichtung 11 führt.

Gemäß der vorliegenden Erfindung wird - sowohl bei der ersten Ausführungsform als auch bei der zweites Ausführungsform - zur Herbeiführung einer Authentisierung des Telekommunikationsendgeräts 20 bei der Servereinrichtung 11 bzw. zur Herbeiführung einer Authentisierung des Identitätsmoduls 21, welches sich in dem Telekommunikationsendgerät 20 befindet, bei der Servereinrichtung 11 ein Verfahren durchgeführt, welches vier Verfahrensschritte aufweist. Das Verfahren beruht auf den kryptographischen Eigenschaften eines asymmetrischen kryptographischen Verfahrens, beispielsweise des RSA-Verfahrens (Rivest, Shamir und Adleman Verfahren) unter Verwendung von zwei Schlüsselpaaren, wobei dem Identitätsmodul 21 ein erstes Schlüsselpaar, umfassend einen ersten öffentlichen Schlüssel und einen ersten privaten Schlüssel, zugeordnet ist und wobei der Servereinrichtung 11 ein zweites Schlüsselpaar, umfassend einen zweiten öffentlichen Schlüssel und einen zweiten privaten Schlüssel, zugeordnet ist.

Im ersten Verfahrensschritt, welcher bei der Herstellung des Identitätsmoduls 21 durchgeführt wird, werden bei der ersten Ausführungsform in dem Speicherbereich 22 des Identitätsmoduls 21 drei Informationen abgelegt: einerseits der erste private Schlüssel, andererseits der erste öffentliche Schlüssel, sowie eine Signatur des ersten öffentlichen Schlüssels mittels des zweiten privaten Schlüssels gemäß des verwendeten kryptographischen Verfahrens durchgeführt wird.

Bei der zweiten Ausführungsform der Erfindung werden im ersten Verfahrensschritt in dem Speicherbereich 22 des Identitätsmoduls 21 zwei Informationen abgelegt: einerseits der erste private Schlüssel und andererseits der erste öffentliche Schlüssel in verschlüsselter Form, wobei die Verschlüsselung des ersten öffentlichen Schlüssels mittels des zweiten privaten Schlüssels gemäß des verwendeten kryptographischen Verfahrens durchgeführt wird.

Im zweiten Verfahrensschritt wird bei der ersten Ausführungsform die dem Identitätsmodul 21 eindeutig zugeordnete Identitätsinformation, bevorzugt zusammen mit weiteren Informationselementen, vom Identitätsmodul 21 generiert, wobei nachfolgend eine Signierung einerseits der Identitätsinformation und andererseits der weiteren Informationselementen mittels des ersten privaten Schlüssels gemäß des kryptographischen Verfahrens vorgesehen ist.

Bei der zweiten Ausführungsform der Erfindung wird im zweiten Verfahrensschritt wird die dem Identitätsmodul 21 eindeutig zugeordnete Identitätsinformation, bevorzugt zusammen mit weiteren Informationselementen, in verschlüsselter Form vom Identitätsmodul 21 generiert, wobei die Verschlüsselung einerseits der Identitätsinformation und andererseits der weiteren Informationselementen mittels des ersten privaten Schlüssels gemäß des kryptographischen Verfahrens vorgesehen ist.

Im dritten Verfahrensschritt wird bei der ersten Ausführungsform der erste öffentliche Schlüssel und die Identitätsinformation zusammen mit ihren Signaturen an die Servereinrichtung 11 übertragen. Diese Übertragung der Nachricht kann zur Sicherung der Vertraulichkeit über einen mittels SSL / TLS gesicherten Kommunikationskanal erfolgen.

Bei der zweiten Ausführungsform der Erfindung wird im dritten Verfahrensschritt wird der erste öffentliche Schlüssel in verschlüsselter Form und die Identitätsinformation in verschlüsselter Form, d.h. eine verschlüsselte Antwortnachricht, an die Servereinrichtung 11 übertragen.

Im vierten Verfahrensschritt wird bei der ersten Ausführungsform von der Servereinrichtung 11 einerseits die Authentizität des ersten öffentlichen Schlüssels mittels des zweiten öffentlichen Schlüssels überprüft und andererseits die Authentizität der Identitätsinformation (d.h. die empfangene verschlüsselte Antwortnachricht) mittels des ersten öffentlichen Schlüssels überprüft, so dass die Antwortnachricht (und als Teil davon insbesondere auch die Identitätsinformation) als geprüftes Datum bei der Servereinrichtung vorliegt bzw. vorhanden ist.

Bei der zweiten Ausführungsform der Erfindung wird im vierten Verfahrensschritt wird von der Servereinrichtung 11 einerseits der erste öffentliche Schlüssel mittels des zweiten öffentlichen Schlüssels entschlüsselt und andererseits die Identitätsinformation (d.h. die empfangene verschlüsselte Antwortnachricht) mittels des entschlüsselten ersten öffentlichen Schlüssels entschlüsselt, so dass die Antwortnachricht (und als Teil davon insbesondere auch die Identitätsinformation) in unverschlüsselter Form bei der Servereinrichtung vorliegt bzw. vorhanden ist.

Die Vorbereitung der SIM-Karte gemäß des ersten Verfahrensschritts des erfindungsgemäßen Verfahrens findet (gemäß sowohl der ersten als auch der zweiten Ausführungsform) im Rahmen der normalen Produktion von SIM-Karten bzw. von Identitätsmodulen bzw. von Smart Cards bei einem SIM-Karten-Hersteller statt. Dort wird mit den üblichen Prozessen ein Java Card™ Applet in die SIM-Karte geladen und im Anschluss daran die Erzeugung eines (dem Identitätsmodul bzw. der SIM-Karte zugeordneten) asymmetrischen Schlüsselpaares (dem SIM-Schlüsselpaar bzw. dem ersten Schlüsselpaar) gestartet. Durch Verwendung eines Krypto-Coprozessors kann dieser Vorgang deutlich beschleunigt werden, so dass er nur wenige Sekunden dauert. Wenn das Schlüsselpaar erzeugt ist, wird durch das Personalisierungssystem der private Server-Schlüssel (bzw. zweite private Schlüssel) des Servers, der den Kunden authentisieren soll, in sicherer Weise in die SIM-Karte geladen.

Gemäß einer weiteren bevorzugen Ausführungsform der vorliegenden Erfindung ist es vorgesehen, dass - falls erforderlich - der private Server-Schlüssel vom Serverbetreiber nochmals verschlüsselt wird und der zum Entschlüsseln notwendige Schlüssel z.B. bereits in den Appletcode einkompiliert ist, d.h. in einem Speicher der SIM-Karte gespeichert ist.

Es ist gemäß einer bevorzugten Ausführungsform der vorliegenden Erfindung möglich, dass mehrere der Servereinrichtung zugeordnete Schlüsselpaare verwendet werden oder aber mehrere Schlüsselpaare verwendet werden, die mehreren (unterschiedlichen) Servereinrichtungen zugeordnet sind. In dieser Situation sind entsprechend eine Mehrzahl von Server-Schlüsselpaaren vorhanden und müssen auch zum Herstellungszeitpunkt der SIM-Karte bzw. des Identitätsmoduls vorhanden sein und in gleicher Weise behandelt werden wie das zweite Schlüsselpaar (bzw. das Server-Schlüsselpaar). Das bedeutet, dass neben dem zweiten Schlüsselpaar (der Servereinrichtung zugeordnet) ein drittes Schlüsselpaar vorhanden ist, welches beispielsweise ebenfalls der Servereinrichtung zugeordnet ist (als weiteres Schlüsselpaar dieser Servereinrichtung) oder aber einer weiteren Servereinrichtung (als Server-Schlüsselpaar dieser weiteren Servereinrichtung) zugeordnet ist. Erfindungsgemäß ist es auf diese Weise möglich, dass eine Mehrzahl von unterschiedlichen Server-Schlüsselpaaren (zweites Schlüsselpaar, drittes Schlüsselpaar, viertes Schlüsselpaar, etc.) bei der Herstellung der SIM-Karte 21 in der gleichen Weise behandelt werden wie das zweite Schlüsselpaar. Somit ist es erfindungsgemäß in vorteilhafter Weise möglich, dass mit einer SIM-Karte 21 mehrere Serverbetreiber den Kunden identifizieren können. Die zusätzlichen Server-Schlüssel werden auf die gleiche, sichere, Weise in die SIM-Karte geladen und verwendet, um (bei der ersten Ausführungsform der Erfindung) Signaturen des öffentlichen SIM-Schlüssels zu erzeugen bzw. um (bei der zweiten Ausführungsform der Erfindung) den öffentlichen SIM-Schlüssel zu verschlüsseln.

Insbesondere ist es erfindungsgemäß vorgesehen, dass - nachdem der private Schlüssel des Servers in die Karte geladen wurde - gemäß der ersten Ausführungsform aus dem vorher erzeugten öffentlichen SIM-Schlüssel der SIM Karte (d.h. der erste öffentliche Schlüssel) mit dem privaten Server-Schlüssel (d.h. dem zweiten privaten Schlüssel) eine Signatur gebildet wird bzw. gemäß der zweiten Ausführungsform der vorher erzeugte öffentliche SIM-Schlüssel der SIM Karte (d.h. der erste öffentliche Schlüssel) mit dem privaten Server-Schlüssel (d.h. dem zweiten privaten Schlüssel) verschlüsselt wird. Der private Server-Schlüssel wird anschließend in der SIM-Karte 21 sofort gelöscht, befindet sich somit nicht mehr in der SIM-Karte und kann deshalb auch nicht kompromittiert werden, wenn die SIM-Karte außerhalb des Herstellungsbetriebs ist, beispielsweise in der Hand des Benutzers ist.

Da der öffentliche SIM-Schlüssel gemäß der ersten Ausführungsform in der Karte verbleibt, ist es möglich - je nach späterer Notwendigkeit - über etablierte sichere Protokolle einen neuen privaten Server-Schlüssel an die SIM-Karte zu senden, um eine neue Signatur des öffentlichen SIM-Schlüssels herzustellen. Die Notwendigkeit für diese Operation könnte z.B. in der Kompromittierung und dem somit notwendigen Austausch des Server-Schlüsselpaares liegen. Ein anderer Grund könnte ein neuer Geschäftspartner sein, mittels dessen weiterem Server-Schlüsselpaar ebenfalls das Identitätsmodul des Benutzers authentisiert werden können soll. Gemäß der zweiten Ausführungsform kann es vorgesehen sein (insbesondere um Speicherplatz auf der SIM-Karte 21 zu sparen), dass der öffentliche SIM-Schlüssel der SIM-Karte 21 am Ende der Personalisierung, d.h. am Ende oder zeitlich nach dem ersten Verfahrensschritt, ebenfalls von der SIM-Karte gelöscht wird. Wenn jedoch bei der zweiten Ausführungsform der öffentliche SIM-Schlüssel in der Karte verbleibt, ist es möglich - je nach späterer Notwendigkeit - über etablierte sichere Protokolle einen neuen privaten Server-Schlüssel an die SIM-Karte zu senden, um eine neue Signatur des öffentlichen SIM-Schlüssels herzustellen. Die Notwendigkeit für diese Operation könnte z.B. ebenfalls in der Kompromittierung und dem somit notwendigen Austausch des Server-Schlüsselpaares liegen. Ein anderer Grund könnte ein neuer Geschäftspartner sein, mittels dessen weiterem Server-Schlüsselpaar ebenfalls das Identitätsmodul des Benutzers authentisiert werden können soll.

Alternativ zur Durchführung
-- (gemäß der ersten Ausführungsform) der Signierung des öffentlichen SIM-Schlüssels mittels des privaten Server-Schlüssels (oder des privaten weiteren Server-Schlüssels (d.h. des dritten privaten Schlüssels)) innerhalb der SIM-Karte 21 bzw.
-- (gemäß der zweiten Ausführungsform) der Verschlüsselung des öffentlichen SIM-Schlüssels mittels des privaten Server-Schlüssels (oder des privaten weiteren Server-Schlüssels (d.h. des dritten privaten Schlüssels)) innerhalb der SIM-Karte 21 kann es erfindungsgemäß auch vorgesehen sein, dass der öffentliche SIM-Schlüssel (d.h. der erste öffentliche Schlüssel), beispielsweise bei der ersten Inbetriebnahme des Identitätsmoduls 21, auf einen Server des Mobilfunkbetreibers übertragen wird (und - jedoch lediglich gemäß der zweiten Ausführungsform - anschließend auf der SIM-Karte 21 gelöscht wird). Die Durchführung der Signierung (des öffentlichen SIM-Schlüssels) mit dem privaten Server-Schlüssel (oder des privaten weiteren Server-Schlüssels (d.h. des dritten privaten Schlüssels), beispielsweise eines weiteren Anbieters) kann gemäß einer solchen alternativen Ausführungsform der ersten Ausführungsform der vorliegenden Erfindung auf diesem Server (des Mobilfunkanbieters) stattfinden und die erzeugte Signatur danach an die SIM-Karte 21 übertragen werden. Entsprechend kann die Durchführung der Verschlüsselung (des öffentlichen SIM-Schlüssels) mit dem privaten Server-Schlüssel (oder des privaten weiteren Server-Schlüssels (d.h. des dritten privaten Schlüssels), beispielsweise eines weiteren Anbieters) kann gemäß einer solchen alternativen Ausführungsform der zweiten Ausführungsform der vorliegenden Erfindung auf diesem Server (des Mobilfunkanbieters) stattfinden und der verschlüsselte öffentliche SIM-Schlüssel danach wieder an die SIM-Karte 21 übertragen werden.

Der erste Verfahrensschritt ist damit abgeschlossen. Nachfolgend wird der Betrieb einer solchermaßen gemäß der vorliegenden Erfindung vorbereiteten SIM-Karte 21 bzw. eines Identitätsmoduls 21 im Zusammenspiel mit einer Servereinrichtung 11 zum Zwecke der Benutzerauthentisierung des Telekommunikationsendgeräts 20 des Benutzers bzw. zur Authentisierung des Identitätsmoduls 21 (insbesondere der SIM-Karte 21) erläutert.

Bei der Benutzung der SIM-Karte 21 wird eine Authentisierungsanforderung entweder in einer Applikation des Telekommunikationsendgeräts 20 oder durch die Servereinrichtung 11 generiert. Durch diese Authentisierungsanforderung wird an die SIM-Karte 21 (spezieller: an das Applet-Programm auf der SIM-Karte 21) der Befehl gesendet, die IMSI-Nummer (bzw. generell die Identitätsinformation in Form einer signierten Antwortnachricht) als signierte Nachricht (erste Ausführungsform der Erfindung) bzw. die IMSI-Nummer (bzw. generell die Identitätsinformation in Form einer verschlüsselten Antwortnachricht) als verschlüsselte Nachricht (zweite Ausführungsform) herauszugeben. Das Applet bzw. das Applet-Programm liest zunächst aus einem Verzeichnis in der SIM-Karte (d.h. aus einem Speicherbereich 22 der SIM-Karte 21) die dort gespeicherte IMSI-Information aus. Um kryptographische Angriffe (in betrügerischer Absicht) zu erschweren, wird in die Antwortnachricht (insbesondere zusätzlich zur Identitätsinformation bzw. zusätzlich zur IMSI-Information) eine Zufallszahl bestimmter (vorgegebener) Länge aufgenommen sowie aus der Antwortnachricht mittels einer geeigneten mathematischen Einweg-Funktion ein Hash (Streuwert) gebildet. Dieser Streuwert wird mit Füllbytes auf die notwendige Größe aufgefüllt und daraus mit dem privaten SIM-Schlüssel eine Signatur gebildet (erste Ausführungsform) bzw. verschlüsselt (zweite Ausführungsform). Wie weiter oben ausgeführt kann ggf. noch ein Datenelement in die Nachricht aufgenommen werden, welches die erfolgreiche Überprüfung einer PIN kennzeichnet. Diese PIN ist ebenfalls innerhalb der SIM Karte, möglicherweise innerhalb des für diese Erfindung notwendigen Applets gespeichert und verlässt niemals die Karte.

Wenn der Einsatz mehrerer verschiedener Server-Schlüsselpaare vorgesehen ist (d.h. neben dem zweiten Schlüsselpaar zeitlich nacheinander oder parallel dazu ein drittes Schlüsselpaar und ggf. noch weitere (vierte, fünfte, etc.) Schlüsselpaare), wird noch ein Datenelement zur Kennzeichnung bzw. zur Identifikation des zur Signierung (erste Ausführungsform) bzw. zur Verschlüsselung (zweite Ausführungsform) des öffentlichen SIM-Schlüssels verwendeten privaten Server-Schlüssels bei der Übermittlung der Antwortnachricht hinzugefügt.

Der zweite Verfahrensschritt ist damit durchgeführt.

Die Daten (d.h. die Antwortnachricht auf die Authentisierungsanforderung), (im Fall der ersten Ausführungsform der öffentliche SIM-Schlüssel sowie die beiden Signaturen, im Fall der zweiten Ausführungsform der verschlüsselte öffentliche SIM-Schlüssel) werden während des dritten Verfahrensschritts durch die auf dem mobilen Endgerät befindliche Applikation, insbesondere über das Internet, optional über eine SSL / TLS oder gleichwertig gesicherte Verbindung, an die Servereinrichtung übertragen, die den Kunden bzw. das Identitätsmodul identifiziert. Ggf. ist neben der Antwortnachricht auch das Datenelement zu übertragen, welches den zur Verschlüsselung des öffentlichen SIM-Schlüssels verwendeten privaten Server-Schlüssels identifiziert.

Der dritte Verfahrensschritt ist damit durchgeführt.

Gemäß dem vierten Verfahrensschritt werden auf der Servereinrichtung die Signaturen des öffentlichen SIM-Schlüssels und der Antwortnachricht überprüft (erste Ausführungsform) bzw. auf der Servereinrichtung der verschlüsselte öffentliche SIM-Schlüssel und die verschlüsselte Antwortnachricht entschlüsselt (zweite Ausführungsform). Dies ist möglich, weil der Servereinrichtung 11 der öffentliche Server-Schlüssel zugänglich ist (dieser befindet sich auf der Servereinrichtung 11). Mit diesem öffentlichen Server-Schlüssel (bzw. zweitem öffentlichen Schlüssel bzw. jedoch auch drittem oder viertem öffentlichen Schlüssel, je nach dem Inhalt des etwaigen zusätzlich zur verschlüsselten Antwortnachricht übersandten Datenelements) wird die Signatur des öffentlichen SIM-Schlüssels überprüft (erste Ausführungsform) bzw. der verschlüsselte öffentliche SIM-Schlüssel entschlüsselt, wodurch der öffentlich SIM-Schlüssel (oder erste öffentliche Schlüssel) im Klartext erhalten wird (zweite Ausführungsform). Es wird im vierten Verfahrensschritt ferner der (gerade überprüfte (erste Ausführungsform) bzw. gerade im Klartext erhaltene bzw. berechnete (zweite Ausführungsform)) öffentliche SIM-Schlüssel dazu verwendet, den signierten (erste Ausführungsform) bzw. verschlüsselten (zweite Ausführungsform) Datenblock (d.h. die signierte Antwortnachricht gemäß der ersten Ausführungsform bzw. die verschlüsselte Antwortnachricht gemäß der zweiten Ausführungsform) zu überprüfen (erste Ausführungsform) bzw. zu entschlüsseln (zweite Ausführungsform).

Wenn diese Operationen erfolgreich sind (d.h. gemäß der ersten Ausführungsform die berechnete Klartextinformation der übersandten Klartextinformation entspricht und gemäß der zweiten Ausführungsform diese Operation ein Ergebnis produziert, welches die erwartete Datenstruktur mit den verschiedenen TLV kodierten Elementen erhält), kann davon ausgegangen werden, dass die beiden auf dem Server durchgeführten kryptographischen Operationen mit zueinander passenden Schlüsseln durchgeführt wurden.

Nach Abschluss des zweiten Teilschritts des vierten Verfahrensschritts (d.h. nach der Überprüfung der Signatur der Antwortnachricht bei der ersten Ausführungsform bzw. nach der Entschlüsselung der Antwortnachricht bei der zweiten Ausführungsform) ist der vierte Verfahrensschrit durchgeführt. Gemäß der zweiten Ausführungsform könnte gemäß einer Variante dieser Ausführungsform auch noch eine Erkennungsinformation im Klartext des öffentlichen SIM-Schlüssels enthalten sein, so dass bereits nach dem ersten Teilschritt des vierten Verfahrensschritts (d.h. nach der Entschlüsselung des öffentlichen SIM-Schlüssels) erkennbar ist, ob dieser Teilschritt erfolgreich war oder nicht.

Durch die beiden miteinander verketteten Operationen des vierten Verfahrensschritts wird kryptographisch folgendes bewiesen:
-- Es wird eindeutig festgestellt, dass der öffentliche SIM-Schlüssel tatsächlich von einer SIM-Karte gesendet wurde, auf dem der private Server-Schlüssel zum Signieren des öffentlichen SIM-Schlüssels (erste Ausführungsform) bzw. zum Verschlüsseln des öffentlichen SIM-Schlüssels (zweite Ausführungsform) verwendet wurde. Da sich der private Server-Schlüssel nur kurze Zeit während der Personalisierung der SIM-Karte auf dieser befindet (bzw. nur während der Herstellung der SIM-Karte vorliegt), muss der öffentliche SIM-Schlüssel zu diesem Zeitpunkt signiert (erste Ausführungsform) bzw. verschlüsselt (zweite Ausführungsform) worden sein. Dieses kann nur dann passieren, wenn die SIM-Karte tatsächlich vom Aussteller des privaten Server-Schlüssels gefertigt worden ist.
-- Weiterhin wurde der zu diesem öffentlichen SIM-Schlüssel zugehörige private SIM-Schlüssel zur Signierung (erste Ausführungsform) bzw. zur Verschlüsselung (zweite Ausführungsform) der an die Servereinrichtung 11 versendeten Nachricht (bzw. Antwortnachricht) verwendet. Somit kann sicher festgestellt werden, dass die in der Nachricht (bzw. Antwortnachricht) enthaltene Identitätsinformation (bzw. IMSI-Nummer) tatsächlich von einer SIM-Karte ausgelesen wurde, die vom Aussteller bzw. Auftraggeber der Herstellung dieser SIM-Karte stammt und über diese IMSI-Nummer (oder sonstige Identitätsinformation) identifiziert werden kann.

Falls zusätzlich die Überprüfung einer PIN-Information erforderlich war, ist weiterhin sichergestellt, dass der Kunde zum Zeitpunkt seiner Identifizierung im Besitz dieser SIM-Karte war und der Identifizierung zugestimmt hat.

Bei asymmetrischen Verschlüsselungsverfahren werden im Allgemeinen aus Performance-Gründen nicht die kompletten Ursprungsdaten für die asymmetrische Operation verwendet. Je nach Anwendungsfall wird ein Hashwert der Daten signiert (Authentisierung), bzw. die Daten werden mit einem symmetrischen Schlüssel verschlüsselt und dieser symmetrische Schlüssel seinerseits asymmetrisch verschlüsselt.

Nachfolgend werden weitere Varianten des erfindungsgemäßen Verfahrens beschrieben:

Jeder, der im Besitz des öffentlichen Server-Schlüssels ist, kann die Authentizität des Kunden anhand der Identitätsinformation bzw. der IMSI-Information überprüfen. Somit hängt es vom Geschäftsmodell beispielsweise eines Diensteanbieters ab, wie er mit diesem öffentlichen Server-Schlüssel umgeht.

Wenn der öffentliche Server-Schlüssel veröffentlicht wird, ist es jedermann möglich, einen Nutzer des Identitätsmoduls 21 eindeutig zu identifizieren. Beispielsweise für den Fall der Programmierung von Applikationen für ein Telekommunikationsendgerät ist es möglich, dass ein Hersteller einer solchen Applikation diese Identifizierung eines Benutzers vornimmt.

Wenn der öffentliche Server-Schlüssel geheim gehalten wird, kann nur der Besitzer dieses Server-Schlüsselpaares ein Identitätsmodul bzw. einen Benutzer des Identitätsmoduls eindeutig identifizieren.

Für Diensteanbieter im Internet ist es herkömmlicherweise schwierig, Kunden eindeutig zu identifizieren. Unter Benutzung der vorliegenden Erfindung ist es für einen Diensteanbieter, beispielsweise im Rahmen eines Internetdienstes (Webservice), möglich einen Benutzer bzw. einen Kunden eindeutig (anhand der Identitätsinformation) zu identifizieren. Es kann auch vorgesehen sein, dass der Dienst alleine darin besteht, einen Kunden (anhand der Identitätsinformation) eindeutig zu identifizieren. Dies wäre ein Beispiel für einen generischen Dienst (als Dienstleistung für andere Diensteanbieter, insbesondere im Internet). Es kann jedoch auch vorgesehen sein, dass die Kundenidentifizierung lediglich ein Teil eines Dienstes eines Diensteanbieters ist.

Für eine dienstespezifische Ausgestaltung ist es sinnvoll, dass der Diensteanbieter sowohl einen über das Internet erreichbaren Server als auch eine Applikation für ein mobiles Endgerät bereitstellt. Möchte der Benutzer bzw. Kunde nun den Service im Internet nutzen, sendet der Internet Server des Diensteanbieters eine Nachricht an die Applikation auf dem mobilen Endgerät. Diese Applikation veranlasst wie bereits dargestellt das Applet auf der SIM-Karte 21 zur Generierung einer Authentisierungsnachricht (d.h. die verschlüsselte Antwortnachricht). Diese Antwortnachricht wird über den Server des Dienstanbieters an den Server des Inhabers des Server-Schlüssels weitergeleitet. Die Antwortnachricht wird dann wie beschrieben entschlüsselt und verifiziert. Anschließend bekommt der Dienstanbieter eine Benachrichtigung, ob der Kunde authentifiziert werden konnte.

Der Kunde kann nun den Webservice entweder über das mobile Endgerät benutzen (wenn die Datenverbindung zwischen mobilem Endgerät und Diensteanbieter nicht unterbrochen wurde, kann der Diensteanbieter sicher sein mit demselben Kunden zu kommunizieren). Möchte der Kunde den Service über einen ans Internet angeschlossenen Arbeitsplatzrechner oder Privatrechner verwenden, kann der Dienstanbieter an die Applikation auf dem mobilen Endgerät eine Information, beispielsweise in Form einer PIN-Information, senden. Diese Information muss der Kunde beim Einloggen am Arbeitsplatzrechner oder Privatrechner eingeben.

Die generische Lösung funktioniert ähnlich wie die dienstspezifische Variante, jedoch erfolgt die Kommunikation zwischen mobiler Applikation, dem Server des Diensteanbieters und dem Server der die Benutzerauthentisierung vornimmt, anders.

Die initiale Ausgangslage ist identisch zum vorherigen Szenario: der Benutzer möchte einen Dienst benutzen, bei dem er sich vorher authentifizieren muss. In der generischen Variante werden die mobile Applikation und der Authentisierungsserver von dem Anbieter des Authentisierungsdienstes bzw. dem Mobilfunkanbieter bereitgestellt.

Wenn der Kunde sich für die Nutzung eines Dienstes anmelden möchte, verwendet er die mobile Applikation, um die Internetseite des Dienstanbieters anzuzeigen. Der Server des Dienstanbieters registriert die Kontaktaufnahme und sendet eine Hypertext Markup Language (HTML)-Seite zurück, auf der sich neben der eigentlichen Antwortseite beispielsweise ein sogenanntes "iFrame"-Element befindet. Dieses iFrame-Element enthält eingebettet einen Verweis (engl. Link) zum Anbieter des Authentisierungsdienstes. In diesem Verweis (Link) ist eine Information (engl. "Token") enthalten, welches diese Authentisierungsanfrage eindeutig identifiziert. Gleichzeitig kontaktiert der Server des Dienstanbieters den Server des Authentisierungsdienstes über eine zweite Schnittstelle und übergibt über eine erste Schnittstelle das in der HTML Seite in den Link eingebettete Token (bzw. die Information).

Wenn der Kunde bzw. Benutzer auf den angezeigten Link klickt, wird er auf einen Server des Authentisierungsanbieters weitergeleitet. Sobald dieses geschieht, sendet der Authentisierungsserver an die mobile Applikation die Aufforderung zur Generierung der Authentisierungsnachricht. Diese wird wie beschrieben erzeugt und an den Authentisierungsserver weitergeleitet. Nach Prüfung der Authentisierung kontaktiert der Authentisierungsserver den Server des Serviceanbieters und übergibt zusammen mit dem ursprünglichen Token die Information, ob der Kunde authentifiziert worden ist.

Durch die Verwendung des iFrame-Elements in der ursprünglichen Antwortseite des Dienstanbieters hat das Internet-Anzeigeprogramm (d.h. der Browser) des Kunden einerseits die Verbindung zum Dienstanbieter offen gehalten, andererseits durch Anklicken des Links zum Autentisierungsanbieter innerhalb des iFrame-Elements diesen kontaktiert. Da der Diensteanbieter durch die offengehaltene Verbindung noch Kontakt zum Kunden hat, kann er sicher sein, den Kunden identifiziert zu haben.

Gemäß einer weiteren bevorzugten Alternative (beider Ausführungsformen) des erfindungsgemäßen Verfahrens ist es vorgesehen, dass - nachdem während der SIM Karten Produktion der öffentliche SIM-Schlüssel mit dem privaten Server-Schlüssel, beispielsweise des Mobilfunkbetreibers, signiert (erste Ausführungsform) bzw. verschlüsselt (zweite Ausführungsform) wurde - die Signatur des SIM-Schlüssels sowie dieser selber (erste Ausführungsform) bzw. der verschlüsselte SIM-Schlüssel (zweite Ausführungsform) an einen Server bzw. eine Servereinrichtung, beispielsweise des Mobilfunkbetreibers, übermittelt wird. Dieser prüft mit dem öffentlichen Server-Schlüssel, dass der SIM-Schlüssel authentisiert ist und speichert den SIM-Schlüssel sicher in einer Datenbank.

Wenn der Fall auftritt, dass der Server-Schlüssel getauscht werden muss, oder ein neuer Server-Schlüssel für einen neuen Dienstpartner zusätzlich in der SIM-Karte gespeichert werden soll, kann der private SIM-Schlüssel auf dem Server mit dem neuen privaten Server-Schlüssel signiert werden und die erzeugte Signatur über gesicherte Kommunikationskanäle in die SIM-Karte geladen werden (erste Ausführungsform) bzw. kann der private SIM-Schlüssel auf dem Server mit dem neuen privaten Server-Schlüssel verschlüsselt werden und über gesicherte Kommunikationskanäle in die SIM-Karte geladen werden (zweite Ausführungsform).

## Patentansprüche

1. Verfahren zur Authentisierung eines Telekommunikationsendgeräts (20) umfassend ein Identitätsmodul (21) an einer Servereinrichtung (11) eines Telekommunikationsnetzes (10), wobei eine dem Identitätsmodul (21) eindeutig zugeordnete Identitätsinformation zur Authentisierung unter Nutzung der Eigenschaften eines asymmetrischen kryptographischen Verfahrens herangezogen wird, wobei dem Identitätsmodul (21) ein erstes Schlüsselpaar, umfassend einen ersten öffentlichen Schlüssel und einen ersten privaten Schlüssel, zugeordnet ist, wobei der Servereinrichtung (11) ein zweites Schlüsselpaar, umfassend einen zweiten öffentlichen Schlüssel und einen zweiten privaten Schlüssel, zugeordnet ist, **dadurch gekennzeichnet, dass** das Verfahren die folgenden Schritte aufweist:
-- in einem ersten Verfahrensschritt wird in einem Speicherbereich (22) des Identitätsmoduls (21)
-- der erste private Schlüssel abgespeichert,
-- der erste öffentliche Schlüssel abgespeichert und
-- eine erste Signatur abgespeichert, wobei die erste Signatur durch Signierung des ersten öffentlichen Schlüssels mittels des zweiten privaten Schlüssels gemäß des kryptographischen Verfahrens vorgesehen ist,
-- in einem zweiten Verfahrensschritt wird die dem Identitätsmodul (21) eindeutig zugeordnete Identitätsinformation vom Identitätsmodul (21) generiert und eine zweite Signatur generiert, wobei die zweite Signatur durch Signierung der Identitätsinformation mittels des ersten privaten Schlüssels gemäß des kryptographischen Verfahrens vorgesehen ist,
-- in einem dritten Verfahrensschritt wird der erste öffentliche Schlüssel, die Identitätsinformation, sowie die erste und zweite Signatur an die Servereinrichtung (11) übertragen,
-- in einem vierten Verfahrensschritt wird von der Servereinrichtung (11)
-- die Authentizität des ersten öffentlichen Schlüssels mittels des zweiten öffentlichen Schlüssels verifiziert und
-- die Authentizität der Identitätsinformation mittels des verifizierten ersten öffentlichen Schlüssels überprüft,
wobei die Identitätsinformation die IMSI-Information (International Mobile Subscriber Identity) des Identitätsmoduls (21) umfasst.

2. Verfahren zur Authentisierung eines Telekommunikationsendgeräts (20) umfassend ein Identitätsmodul (21) an einer Servereinrichtung (11) eines Telekommunikationsnetzes (10), wobei eine dem Identitätsmodul (21) eindeutig zugeordnete Identitätsinformation zur Authentisierung unter Nutzung der Eigenschaften eines asymmetrischen kryptographischen Verfahrens herangezogen wird, wobei dem Identitätsmodul (21) ein erstes Schlüsselpaar, umfassend einen ersten öffentlichen Schlüssel und einen ersten privaten Schlüssel, zugeordnet ist, wobei der Servereinrichtung (11) ein zweites Schlüsselpaar, umfassend einen zweiten öffentlichen Schlüssel und einen zweiten privaten Schlüssel, zugeordnet ist, **dadurch gekennzeichnet, dass** das Verfahren die folgenden Schritte aufweist:
-- in einem ersten Verfahrensschritt wird in einem Speicherbereich (22) des Identitätsmoduls (21)
-- der erste private Schlüssel abgespeichert und
-- der erste öffentliche Schlüssel in verschlüsselter Form abgespeichert, wobei die Verschlüsselung des ersten öffentlichen Schlüssels mittels des zweiten privaten Schlüssels gemäß des kryptographischen Verfahrens vorgesehen ist,
-- in einem zweiten Verfahrensschritt wird die dem Identitätsmodul (21) eindeutig zugeordnete Identitätsinformation in verschlüsselter Form vom Identitätsmodul (21) generiert, wobei die Verschlüsselung der Identitätsinformation mittels des ersten privaten Schlüssels gemäß des kryptographischen Verfahrens vorgesehen ist,
-- in einem dritten Verfahrensschritt wird der erste öffentliche Schlüssel in verschlüsselter Form und die Identitätsinformation in verschlüsselter Form an die Servereinrichtung (11) übertragen,
-- in einem vierten Verfahrensschritt wird von der Servereinrichtung (11)
-- der erste öffentliche Schlüssel mittels des zweiten öffentlichen Schlüssels entschlüsselt und
-- die Identitätsinformation mittels des entschlüsselten ersten öffentlichen Schlüssels entschlüsselt.

3. Verfahren nach Anspruch 1 oder 2, **dadurch gekennzeichnet, dass** das Telekommunikationsendgerät (20) eine Benutzerschnittstelle aufweist, wobei zeitlich vor oder während des zweiten Verfahrensschritts eine Benutzereingabe einer vertraulichen Information über die Benutzerschnittstelle des Telekommunikationsendgeräts (20) vorgesehen ist.

4. Verfahren nach einem der vorhergehenden Ansprüchen, **dadurch gekennzeichnet, dass** die Übertragung im dritten Verfahrensschritt mittels eines Verschlüsselungsprotokolls erfolgt.

5. Verfahren nach einem der vorhergehenden Ansprüchen, **dadurch gekennzeichnet, dass** bei der Übertragung im dritten Verfahrensschritt zusätzlich eine Zählerinformation übertragen wird, wobei es die Übertragung der Zählerinformation der Servereinrichtung (11) gestattet, die Übertragung einer zeitlich vorangehenden ersten Nachrichtenübertragung gemäß dem dritten Verfahrensschritt von einer zeitlich nachfolgenden zweiten Nachrichtenübertragung gemäß dem dritten Verfahrensschritt.

6. Verfahren nach einem der Ansprüche 1, 3, 4 oder 5, **dadurch gekennzeichnet, dass** der Servereinrichtung (11) oder einer weiteren Servereinrichtung ein drittes Schlüsselpaar, umfassend einen dritten öffentlichen Schlüssel und einen dritten privaten Schlüssel, zugeordnet ist,
-- wobei während des ersten Verfahrensschritts in dem Speicherbereich (22) des Identitätsmoduls (21) eine dritte Signatur abgespeichert wird, wobei die dritte Signatur durch Signierung des ersten öffentlichen Schlüssels mit dem dritten privaten Schlüssel gemäß des kryptographischen Verfahrens vorgesehen ist,
-- wobei während des dritten Verfahrensschritts der erste öffentliche Schlüssel sowie die erste und dritte Signatur an die Servereinrichtung (11) übertragen wird, und
-- wobei während des vierten Verfahrensschritts von der Servereinrichtung (11)
-- die dritte Signatur mittels des dritten öffentlichen Schlüssels geprüft wird und
-- die erste Signatur mittels des ersten öffentlichen Schlüssels geprüft wird.

7. Verfahren nach einem der Ansprüche 2 bis 5, **dadurch gekennzeichnet, dass** der Servereinrichtung (11) oder einer weiteren Servereinrichtung ein drittes Schlüsselpaar, umfassend einen dritten öffentlichen Schlüssel und einen dritten privaten Schlüssel, zugeordnet ist,
-- wobei während des ersten Verfahrensschritts in dem Speicherbereich (22) des Identitätsmoduls (21) der erste öffentliche Schlüssel in einer weiteren verschlüsselten Form abgespeichert wird, wobei die weitere verschlüsselte Form des ersten öffentlichen Schlüssels eine Verschlüsselung des ersten öffentlichen Schlüssels mittels des dritten privaten Schlüssels gemäß des kryptographischen Verfahrens ist,
-- wobei während des dritten Verfahrensschritts der erste öffentliche Schlüssel auch in der weiteren verschlüsselten Form an die Servereinrichtung (11) übertragen wird, und
-- wobei während des vierten Verfahrensschritts von der Servereinrichtung (11)
-- der erste öffentliche Schlüssel in der weiteren verschlüsselten Form mittels des dritten öffentlichen Schlüssels entschlüsselt wird und
-- die Identitätsinformation mittels des entschlüsselten ersten öffentlichen Schlüssels entschlüsselt wird.

8. Verfahren nach einem der vorhergehenden Ansprüchen 2 bis 7, **dadurch gekennzeichnet, dass** die Identitätsinformation die IMSI-Information (International Mobile Subscriber Identity) des Identitätsmoduls (21) ist.

9. Verfahren nach einem der vorhergehenden Ansprüchen, **dadurch gekennzeichnet, dass** das Identitätsmodul (21) eine SIM-Karte (Subscriber Identity Module) oder eine USIM-Karte (Universal Subscriber Identity Module) ist.

10. Identitätsmodul (21) zur verbesserten Authentisierung eines Telekommunikationsendgeräts (20) an einer Servereinrichtung (11) eines Telekommunikationsnetzes (10), wobei eine dem Identitätsmodul (21) eindeutig zugeordnete Identitätsinformation zur Authentisierung unter Nutzung der Eigenschaften eines asymmetrischen kryptographischen Verfahrens vorgesehen ist, wobei dem Identitätsmodul (21) ein erstes Schlüsselpaar, umfassend einen ersten öffentlichen Schlüssel und einen ersten privaten Schlüssel, zugeordnet ist, wobei der Servereinrichtung (11) ein zweites Schlüsselpaar, umfassend einen zweiten öffentlichen Schlüssel und einen zweiten privaten Schlüssel, zugeordnet ist, **dadurch gekennzeichnet, dass** in einem Speicherbereich (22) des Identitätsmoduls (21)
-- der erste private Schlüssel abgespeichert ist,
-- der erste öffentliche Schlüssel abgespeichert ist und
-- eine erste Signatur abgespeichert ist, wobei die erste Signatur durch Signierung des ersten öffentlichen Schlüssels mittels des zweiten privaten Schlüssels gemäß des kryptographischen Verfahrens vorgesehen ist,
wobei ferner eine zweite Signatur vorgesehen ist, wobei die zweite Signatur durch Signierung der dem Identitätsmodul (21) eindeutig zugeordneten Identitätsinformation mittels des ersten privaten Schlüssels gemäß des kryptographischen Verfahrens vorgesehen ist, so dass seitens der Servereinrichtung (11)
-- eine Überprüfung der ersten Signatur mittels des zweiten öffentlichen Schlüssels und
-- eine Überprüfung der zweiten Signatur mittels des ersten öffentlichen Schlüssels
ermöglicht ist,
wobei die Identitätsinformation die IMSI-Information (International Mobile Subscriber Identity) des Identitätsmoduls (21) umfasst.

11. Identitätsmodul (21) zur Authentisierung eines Telekommunikationsendgeräts (20) an einer Servereinrichtung (11) eines Telekommunikationsnetzes (10), wobei eine dem Identitätsmodul (21) eindeutig zugeordnete Identitätsinformation zur Authentisierung unter Nutzung der Eigenschaften eines asymmetrischen kryptographischen Verfahrens vorgesehen ist, wobei dem Identitätsmodul (21) ein erstes Schlüsselpaar, umfassend einen ersten öffentlichen Schlüssel und einen ersten privaten Schlüssel, zugeordnet ist, wobei der Servereinrichtung (11) ein zweites Schlüsselpaar, umfassend einen zweiten öffentlichen Schlüssel und einen zweiten privaten Schlüssel, zugeordnet ist, **dadurch gekennzeichnet, dass** das in einem Speicherbereich (22) des Identitätsmoduls (21)
-- der erste private Schlüssel abgespeichert ist und
-- der erste öffentliche Schlüssel in verschlüsselter Form abgespeichert ist,
wobei die Verschlüsselung des ersten öffentlichen Schlüssels mittels des zweiten privaten Schlüssels gemäß des kryptographischen Verfahrens vorgesehen ist,
wobei ferner eine Generierung durch das Identitätsmodul (21) der dem Identitätsmodul (21) eindeutig zugeordnete Identitätsinformation in verschlüsselter Form vorgesehen ist, wobei die Verschlüsselung der Identitätsinformation mittels des ersten privaten Schlüssels gemäß des kryptographischen Verfahrens vorgesehen ist, so dass seitens der Servereinrichtung (11)
-- eine Entschlüsselung des ersten öffentlichen Schlüssels mittels des zweiten öffentlichen Schlüssels und
-- eine Entschlüsselung der Identitätsinformation mittels des entschlüsselten ersten öffentlichen Schlüssels
ermöglicht ist.

12. Computerprogramm mit Programmcodemitteln, mit deren Hilfe alle Schritte eines Verfahrens nach einem der Ansprüche 1 bis 9 durchführbar sind, wenn das Computerprogramm auf einem Identitätsmodul (21), einem Computer oder einer entsprechenden Recheneinheit ausgeführt wird.

13. Computerprogrammprodukt mit einem computerlesbaren Medium und einem auf dem computerlesbaren Medium gespeicherten Computerprogramm mit Programmcodemitteln, die dazu geeignet sind, dass alle Schritte eines Verfahrens nach einem der Ansprüche 1 bis 9 durchführbar sind, wenn das Computerprogramm auf einem Identitätsmodul (21), einem Computer oder einer entsprechenden Recheneinheit ausgeführt wird.

## Claims

1. Method for authenticating, on a server device (11) of a telecommunications network (10), a telecommunications terminal (20) comprising an identity module (21), wherein identity information uniquely allocated to the identity module (21) is used for the authentication using the properties of an asymmetric cryptographic method, wherein a first key pair comprising a first public key and a first private key is allocated to the identity module (21), wherein a second key pair comprising a second public key and a second private key is allocated to the server device (11), **characterised in that** the method comprises the steps of:
- in a first method step, in a storage region (22) of the identity module (21)
- the first private key is stored,
- the first public key is stored and
- a first signature is stored, wherein the first signature is provided by signing the first public key by means of the second private key according to the cryptographic method,
- in a second method step, the identity information uniquely allocated to the identity module (21) is generated by the identity module (21) and a second signature is generated, wherein the second signature is provided by signing the identity information by means of the first private key according to the cryptographic method,
- in a third method step, the first public key, the identity information and the first and second signature are transmitted to the server device (11),
- in a fourth method step, by means of the server device (11)
- the authenticity of the first public key is verified by means of the second public key and
- the authenticity of the identity information is checked by means of the verified first public key;
wherein the identity information comprises International Mobile Subscriber Identity (IMSI) information of the identity module (21).

2. Method for authenticating, on a server device (11) of a telecommunications network (10), a telecommunications terminal (20) comprising an identity module (21), wherein identity information uniquely allocated to the identity module (21) is used for the authentication using the properties of an asymmetric cryptographic method, wherein a first key pair comprising a first public key and a first private key is allocated to the identity module (21), wherein a second key pair comprising a second public key and a second private key is allocated to the server device (11), **characterised in that** the method comprises the steps of:
- in a first method step, in a storage region (22) of the identity module (21)
- the first private key is stored and
- the first public key is stored in encrypted form,
wherein the encryption of the first public key is provided by means of the second private key according to the cryptographic method,
- in a second method step, the identity information uniquely allocated to the identity module (21) is generated in encrypted form by the identity module (21), wherein the encryption of the identity information is provided by means of the first private key according to the cryptographic method,
- in a third method step, the first public key in encrypted form and the identity information in encrypted form are transmitted to the server device (11),
- in a fourth method step, by means of the server device (11)
- the first public key is decrypted by means of the second public key and
- the identity information is decrypted by means of the decrypted first public key.

3. Method as claimed in claim 1 or 2, **characterised in that** the telecommunications terminal (20) has a user interface, wherein, in the time prior to or during the second method step, a user input of confidential information is provided via the user interface of the telecommunications terminal (20).

4. Method as claimed in any one of the preceding claims, **characterised in that** the transmission in the third method step is performed using an encryption protocol.

5. Method as claimed in any one of the preceding claims, **characterised in that** during the transmission in the third method step counter information is additionally transmitted, wherein the transmission of the counter information allows the server device (11) [lacuna] the transmission of a preceding first message transmission according to the third method step from a subsequent second message transmission according to the third method step.

6. Method as claimed in any one of claims 1, 3, 4 or 5, **characterised in that** a third key pair comprising a third public key and a third private key is allocated to the server device (11) or to a further server device;
- wherein, during the first method step, in the storage region (22) of the identity module (21) a third signature is stored, wherein the third signature is provided by signing the first public key with the third private key according to the cryptographic method,
- wherein, during the third method step, the first public key as well as the first and third signature are transmitted to the server device (11) and
- wherein, during the fourth method step, by means of the server device (11)
- the third signature is checked by means of the third public key and
- the first signature is checked by means of the first public key.

7. Method as claimed in any one of claims 2 to 5, **characterised in that** a third key pair comprising a third public key and a third private key is allocated to the server device (11) or to a further server device,
- wherein, during the first method step, in the storage region (22) of the identity module (21) the first public key is stored in a further encrypted form, wherein the further encrypted form of the first public key is an encryption of the first public key by means of the third private key according to the cryptographic method,
- wherein during the third method step, the first public key also in the further encrypted form is transmitted to the server device (11) and
- wherein during the fourth method step, by means of the server device (11)
- the first public key in the further encrypted form is decrypted by means of the third public key and
- the identity information is decrypted by means of the decrypted first public key.

8. Method as claimed in any one of the preceding claims 2 to 7, **characterised in that** the identity information is International Mobile Subscriber Identity (IMSI) information of the identity module (21).

9. Method as claimed in any one of the preceding claims, **characterised in that** the identity module (21) is a Subscriber Identity Module (SIM) card or a Universal Subscriber Identity Module (USIM) card.

10. Identity module (21) for improved authentication of a telecommunications terminal (20) on a server device (11) of a telecommunications network (10), wherein identity information uniquely allocated to the identity module (21) is provided for the authentication using the properties of an asymmetric cryptographic method, wherein a first key pair comprising a first public key and a first private key is allocated to the identity module (21), wherein a second key pair comprising a second public key and a second private key is allocated to the server device (11), **characterised in that** in a storage region (22) of the identity module (21)
- the first private key is stored,
- the first public key is stored and
- a first signature is stored, wherein the first signature is provided by signing the first public key by means of the second private key according to the cryptographic method,
wherein furthermore a second signature is provided,
wherein the second signature is provided by signing the identity information uniquely allocated to the identity module (21) by means of the first private key according to the cryptographic method so that on the part of the server device (11)
- a check of the first signature by means of the second public key and
- a check of the second signature by means of the first public key
is permitted,
wherein the identity information comprises the International Mobile Subscriber Identity (IMSI) information of the identity module (21).

11. Identity module (21) for authenticating a telecommunications terminal (20) on a server device (11) of a telecommunications network (10), wherein identity information uniquely allocated to the identity module (21) is provided for the authentication using the properties of an asymmetric cryptographic method, wherein a first key pair comprising a first public key and a first private key is allocated to the identity module (21), wherein a second key pair comprising a second public key and a second private key is allocated to the server device (11), **characterised in that** in a storage region (22) of the identity module (21)
- the first private key is stored and
- the first public key is stored in encrypted form,
wherein the encryption of the first public key is provided by means of the second private key according to the cryptographic method,
wherein furthermore a generation is provided by the identity module (21) of the identity information, uniquely allocated to the identity module (21), in encrypted form, wherein the encryption of the identity information is provided by means of the first private key according to the cryptographic method, so that on the part of the server device (11)
- a decryption of the first public key by means of the second public key and
- a decryption of the identify information by means of the decrypted first public key
is permitted.

12. Computer program comprising program code means, with the aid of which all of the steps of a method as claimed in any one of claims 1 to 9 can be carried out when the computer program is executed on an identity module (21), a computer or a corresponding arithmetic unit.

13. Computer program product comprising a computer-readable medium and a computer program which is stored on a computer-readable medium and has program code means, which are suitable for performing all of the steps of a method as claimed in any one of claims 1 to 9 when the computer program is executed on an identity module (21), a computer or a corresponding arithmetic unit.

## Revendications

1. Procédé pour authentifier un terminal de télécommunication (20), comprenant un module d'identité (21) au niveau d'un dispositif serveur (11) d'un réseau de télécommunication (10), dans lequel une information d'identité associée de manière univoque au module d'identité (21) est invoquée pour l'authentification en utilisant les propriétés d'une procédure de cryptographie asymétrique, dans lequel est associée au module d'identité (21) une première paire de clés, comprenant une première clé publique et une première clé privée, dans lequel est associée au dispositif serveur (11) une deuxième paire de clés, comprenant une deuxième clé publique et une deuxième clé privée, **caractérisé en ce que** le procédé présente les étapes suivantes :
- dans une première étape de procédé, dans une zone de mémoire (22) du module d'identité (21),
- la première clé privée est enregistrée,
- la première clé publique est enregistrée et
- une première signature est enregistrée, la première signature étant prévue par la signature de la première clé publique à l'aide de la deuxième clé privée selon la procédure de cryptographie,
- dans une deuxième étape de procédé, l'information d'identité associée de manière unique au module d'identité (21) est générée par le module d'identité (21) et une seconde signature est générée, la seconde signature étant prévue par la signature de l'information d'identité à l'aide de la première clé privée selon la procédure de cryptographie,
- dans une troisième étape de procédé, la première clé publique, l'information d'identité, ainsi que la première et la seconde signature sont transmises au dispositif serveur (11),
- dans une quatrième étape de procédé, le dispositif serveur (11) vérifie
- l'authenticité de la première clé publique à l'aide de la deuxième clé publique, et
- contrôle l'authenticité de l'information d'identité à l'aide de la première clé publique vérifiée,
dans lequel l'information d'identité comprend les l'information IMSI (International Mobile Subscriber Identity ou Identité d'abonné mobile internationale) du module d'identité (21).

2. Procédé pour authentifier un terminal de télécommunication (20) comprenant un module d'identité (21) au niveau d'un dispositif serveur (11) d'un réseau de télécommunication (10), dans lequel une information d'identité associée de manière unique au module d'identité est invoquée pour l'authentification en utilisant les propriétés d'une procédure de cryptographie asymétrique, dans lequel est associée au module d'identité (21) une première paire de clés, comprenant une première clé publique et une première clé privée, dans lequel est associée au dispositif serveur (11) une deuxième paire de clés, comprenant une deuxième clé publique et une deuxième clé privée, **caractérisé en ce que** le procédé présente les étapes suivantes :
- dans une première étape de procédé, dans une zone de mémoire (22) du module d'identité (21),
- la première clé privée est enregistrée, et
- la première clé publique est enregistrée sous forme chiffrée,
le chiffrement de la première clé publique étant prévu à l'aide de la deuxième clé privée selon la procédure de cryptographie,
- dans une deuxième étape de procédé, l'information d'identité associée de manière unique au module d'identité (21) est générée sous forme chiffrée par le module d'identité (21), le chiffrement de l'information d'identité étant prévu à l'aide de la première clé privée selon la procédure de cryptographie,
- dans une troisième étape de procédé, la première clé publique est transmise sous forme chiffrée au dispositif serveur (11) et l'information d'identité est transmise sous forme chiffrée au dispositif serveur (11),
- dans une quatrième étape de procédé, le dispositif serveur (11)
- déchiffre la première clé publique à l'aide de la deuxième clé publique, et
- déchiffre l'information d'identité à l'aide de la première clé publique déchiffrée.

3. Procédé selon la revendication 1 ou 2, **caractérisé en ce que** le terminal de télécommunication (20) présente une interface utilisateur, dans lequel, temporellement avant ou pendant la deuxième étape de procédé, une entrée utilisateur d'une information confidentielle est prévue par le biais de l'interface utilisateur du terminal de télécommunication (20).

4. Procédé selon une des revendications précédentes, **caractérisé en ce que** la transmission dans la troisième étape de procédé se fait à l'aide d'un protocole de chiffrement.

5. Procédé selon une des revendications précédentes, **caractérisé en ce que**, lors de la transmission dans la troisième étape de procédé, une information de compteur est en outre transmise, autorisant la transmission de l'information de compteur au dispositif serveur (11), la transmission d'une première transmission de messages selon la troisième étape de procédé précédent dans le temps à une seconde transmission de messages selon la troisième étape de procédé suivante dans le temps.

6. Procédé selon une des revendications 1, 3, 4 ou 5, **caractérisé en ce qu'**une troisième paire de clés, comprenant une troisième clé publique et une troisième clé privée, est associée au dispositif serveur (11) ou à un autre dispositif serveur,
- dans lequel, pendant la première étape de procédé, dans la zone de mémoire (22) du module d'identité (21), une troisième signature est enregistrée, la troisième signature étant prévue par la signature de la première clé publique avec la troisième clé privée selon la procédure de cryptographie,
- dans lequel pendant la troisième étape de procédé, la première clé publique ainsi que la première et la troisième signature sont transmises au dispositif serveur (11), et
- dans lequel pendant la quatrième étape de procédé, le dispositif serveur (11) vérifie
- la troisième signature à l'aide de la troisième clé publique, et
- la première signature à l'aide de la première clé publique.

7. Procédé selon une des revendications 2 à 5, **caractérisé en ce qu'**une troisième paire de clés, comprenant une troisième clé publique et une troisième clé privée, est associée au dispositif serveur (11) ou à un autre dispositif serveur,
- dans lequel pendant la première étape de procédé, dans la zone de mémoire (22) du module d'identité (21), la première clé publique est enregistrée dans une autre forme chiffrée, l'autre forme chiffrée de la première clé publique étant un chiffrement de la première clé publique à l'aide de la troisième clé privée selon la procédure de cryptographie,
- dans lequel pendant la troisième étape de procédé, la première clé publique est également transmise dans l'autre forme chiffrée au dispositif serveur (11), et
- dans lequel pendant la quatrième étape de procédé, le dispositif serveur (11) déchiffre
- la première clé publique dans l'autre forme chiffrée à l'aide de la troisième clé publique, et
- l'information d'identité à l'aide de la première clé publique déchiffrée.

8. Procédé selon une des revendications précédentes 2 à 7, **caractérisé en ce que** l'information d'identité est l'information IMSI (International Mobile Subscriber Identity ou Identité d'abonné mobile internationale) du module d'identité (21).

9. Procédé selon une des revendications précédentes, **caractérisé en ce que** le module d'identité (21) est une carte SIM (Subscriber Identity Module ou Module d'identité de l'abonné) ou une carte USIM (Universal Subscriber Identity Module ou module universel d'identité de l'abonné).

10. Module d'identité (21) pour améliorer l'authentification d'un terminal de télécommunication (20) au niveau d'un dispositif serveur (11) d'un réseau de télécommunication (10), dans lequel une information d'identité associée de manière unique au module d'identité (21) est prévue pour l'authentification en utilisant les propriétés d'une procédure de cryptographie asymétrique, dans lequel est associée au module d'identité (21) une première paire de clés, comprenant une première clé publique et une première clé privée, dans lequel est associée au dispositif serveur (11) une deuxième paire de clés, comprenant une deuxième clé publique et une deuxième clé privée, **caractérisé en ce que**, dans une zone de mémoire (22) du module d'identité (21),
- la première clé privée est enregistrée,
- la première clé publique est enregistrée, et
- une première signature est enregistrée, la première signature étant prévue par la signature de la première clé publique à l'aide de la deuxième clé privée selon la procédure de cryptographie,
dans lequel, en outre une seconde signature est prévue, la seconde signature étant prévue par la signature de l'information d'identité associée de manière unique au module d'identité (21) à l'aide de la première clé privée selon la procédure de cryptographie, de telle sorte que, du côté du dispositif serveur (11),
- une vérification de la première signature est possible à l'aide de la deuxième clé publique, et
- une vérification de la seconde signature est possible à l'aide de la première clé publique,
dans lequel l'information d'identité comprend l'information IMSI (International Mobile Subscriber Identity ou Identité d'abonné mobile internationale) du module d'identité (21).

11. Module d'identité (21) pour l'authentification d'un terminal de télécommunication (20) au niveau d'un dispositif serveur (11) d'un réseau de télécommunication (10), dans lequel une information d'identité associée de manière unique au module d'identité (21) est prévue pour l'authentification en utilisant les propriétés d'une procédure de cryptographie asymétrique, dans lequel est associée au module d'identité (21) une première paire de clés, comprenant une première clé publique et une première clé privée, dans lequel est associée au dispositif serveur (11) une deuxième paire de clés, comprenant une deuxième clé publique et une deuxième clé privée, **caractérisé en ce que** dans une zone de mémoire (22) du module d'identité (21),
- la première clé privée est enregistrée, et
- la première clé publique est enregistrée sous forme chiffrée, le chiffrement de la première clé publique étant prévu à l'aide de la deuxième clé privée selon la procédure de cryptographie, dans lequel en outre une génération par le module d'identité (21) de l'information d'identité associée de manière unique au module d'identité (21) est prévue sous forme chiffrée, le chiffrement de l'information d'identité étant prévu à l'aide de la première clé privée selon la procédure de cryptographie, de telle sorte que, du côté du dispositif serveur (11),
- un déchiffrement de la première clé publique est possible à l'aide de la deuxième clé publique, et
- un déchiffrement de l'information d'identité est possible à l'aide de la première clé publique déchiffrée.

12. Programme informatique comprenant des moyens de code de programme qui permettent de mettre en oeuvre toutes les étapes d'un procédé selon une des revendications 1 à 9 lorsque le programme informatique est exécuté sur un module d'identité (21), un ordinateur ou une unité de calcul correspondante.

13. Produit de programme informatique comprenant un support lisible par ordinateur et un programme informatique enregistré sur le support lisible par ordinateur avec des moyens de code de programme qui sont adaptés pour mettre en oeuvre toutes les étapes d'un procédé selon une des revendications 1 à 9 lorsque le programme informatique est exécuté sur un module d'identité (21), un ordinateur ou une unité de calcul correspondante.
